# EUROPÄISCHE PATENTSCHRIFT

(11) **EP 3 954 503 B1**
(45) Veröffentlichungstag und Bekanntmachung des Hinweises auf die Patenterteilung: **07.06.2023**
(21) Anmeldenummer: 20190871.2
(22) Anmeldetag: 13.08.2020
(51) Int. Cl.: B25B 27/14

(54) **EINBAUAUTOMAT FÜR EIN EINBAUWERKZEUG FÜR EINEN DRAHTGEWINDEEINSATZ SOWIE INSTALLATIONSVERFAHREN**
INSTALLATION DEVICE FOR AN INSTALLATION TOOL FOR A WIRE THREAD INSERT AND INSTALLATION METHOD
DISPOSITIF AUTOMATIQUE D'INSTALLATION POUR UN OUTIL D'INSTALLATION POUR UN INSERT DE FILETAGE ET PROCÉDÉ D'INSTALLATION

(43) Veröffentlichungstag der Anmeldung: 16.02.2022
(73) Patentinhaber: Böllhoff Verbindungstechnik GmbH, 33649 Bielefeld (DE)
(72) Erfinder: STÜCKER, Daniel, 33397 Rietberg (DE)
(74) Vertreter: HWP Intellectual Property

(56) Entgegenhaltungen:
- EP-A2- 1 428 627
- EP-B1- 1 084 800
- CH-A- 261 878
- US-A1- 2003 024 594

## Beschreibung

### 1. Gebiet der Erfindung

Die vorliegende Erfindung betrifft einen Einbauautomaten, der mit einem Einbauwerkzeug für einen Drahtgewindeeinsatz in einer Gewindebohrung eines Bauteils verbindbar ist, um einen Drahtgewindeeinsatz automatisch in dieser Gewindebohrung einzubauen. Des Weiteren betrifft vorliegende Erfindung einen Einbauautomaten in Kombination mit einem derartigen Einbauwerkzeug. Des Weiteren betrifft vorliegende Erfindung ein Installationsverfahren für einen Drahtgewindeeinsatz in einer Gewindebohrung eines Bauteils mit dem Einbauautomaten.

### 2. Hintergrund der Erfindung

Im Stand der Technik sind verschiedene Drahtgewindeeinsätze zum Einbau in einer Bohrung mit einem Aufnahmegewinde eines Bauteils bekannt. Diese Drahtgewindeeinsätze sind beispielsweise in US-A-2,363,789, EP-A-0 140 812 und EP-A-0 157 715 beschrieben. Regelmäßig muss der Außendurchmesser der zylindrischen Wendel des Drahtgewindeeinsatzes etwas größer als der Innendurchmesser des Aufnahmegewindes des Bauteils gewählt werden. Auf diese Weise wird sichergestellt, dass durch die elastische Rückverformung des Drahtgewindeeinsatzes nach Installation im Aufnahmegewinde ein fester Sitz des Drahtgewindeeinsatzes erzielt wird.

Verschiedene Ausgestaltungen von Drahtgewindeeinsätzen sind beispielsweise in EP-B1-0 983 445 beschrieben. Dazu gehört beispielsweise der Drahtgewindeeinsatz, der aus einer zylindrischen Wendel mit einer Mehrzahl von schraubenförmig gewickelten Windungen besteht. Eine erste Windung dieser zylindrischen Wendel mündet in einen geradlinig radial in die zylindrische Wendel ragenden Einbauzapfen. Mit Hilfe eines geeigneten Installationswerkzeugs wird dieser Einbauzapfen gegriffen und damit der Drahtgewindeeinsatz in dem Aufnahmegewinde der Bauteilöffnung installiert bzw. darin eingeschraubt. Nach abgeschlossener Installation wird der Einbauzapfen entfernt, indem er mit Hilfe der Sollbruchstelle in der ersten Windung abgebrochen wird. Auf diese Weise entsteht ein Aufnahmegewinde mit einem durchgängig einschraubbaren Drahtgewindeeinsatz.

Derartige Drahtgewindeeinsätze mit einem zu brechenden Einbauzapfen werden mit Hilfe eines Einbauautomaten und dazugehörigem Installationswerkzeug installiert, wie er in EP 1 428 627 A2 sowie in DE 600 08 330 T2 beschrieben ist. Trotz konstruktiver Unterschiede der beiden genannten Einbauautomaten nutzt die grundlegende Konstruktion eine drehende Antriebseinheit, also einen Elektromotor, um die Installationsspindel mit dem Drahtgewindeeinsatz der Gewindebohrung zuzustellen und dort einzuschrauben. Eine Drehung des verwendeten Motors wird beispielsweise über ein Zahnradgetriebe übertragen. Dieses Zahnradgetriebe dreht einen hohlzylindrisch ausgebildeten Dorn, wie es in DE 600 08 330 T2 beschrieben ist. Eine Gewindeverbindung zwischen dem Dorn und einer Hülse mit Innengewinde wandelt die Drehung des Motors in eine geradlinige Installationsbewegung des Dorns in die Gewindebohrung um. Im hohlzylindrisch ausgebildeten Dorn ist ein Stempel angeordnet, der mit einem pneumatischen Zylinder betätigt wird. Der pneumatische Zylinder in Kombination mit diesem Stempel dient allein dazu, den am Drahtgewindeeinsatz vorhandenen Installationszapfen nach abgeschlossener Installation zu brechen. Nach dem Bruch des Zapfens wird entsprechend der drehenden Installation des Drahtgewindeeinsatzes der Dorn drehend wieder aus der Gewindebohrung mit installiertem Drahtgewindeeinsatz entfernt.

WO 2012/062604 beschreibt einen Drahtgewindeeinsatz, der einen bogenförmig radial in die Wendel ragenden Mitnehmerzapfen aufweist. Im Unterschied zu dem oben beschriebenen Drahtgewindeeinsatz wird der bogenförmig ausgebildete Mitnehmerzapfen nach erfolgter Installation in das Innengewinde der Bauteilöffnung zurückgebogen. Dieser zurückbiegbare Zapfen verbleibt nach erfolgter Installation im Innengewinde der Bauteilöffnung, was beispielsweise störenden Abfall während des Installationsverfahrens vermeidet.

Ein entsprechendes Werkzeug zur Installation des Drahtgewindeeinsatzes mit zurückbiegbarem Zapfen ist in der bereits oben genannten WO 2012/062604 A1 beschrieben. Eine alternative Ausgestaltung eines derartigen Werkzeugs geht aus WO 2018/114122 hervor. Diese Installationswerkzeuge zeichnen sich dadurch aus, dass der Drahtgewindeeinsatz zunächst auf eine hohlzylindrisch ausgebildete Installationsspindel aufgespindelt bzw. aufgeschraubt wird. Die axiale Stirnfläche der Installationsklinge, die in Installationsrichtung vorne angeordnet ist, sorgt durch geeignete Angriffsschultern und Vorsprünge dafür, dass das Installationswerkzeug den zurückbiegbaren Zapfen greifen und eindrehen kann. Im Inneren der hohlzylindrischen Installationsspindel ist ein Stellglied angeordnet, welches durch eine lineare Bewegung gezielt eine Installationsklinge ausstellt. Diese Installationsklinge bildet eine aus der Installationsspindel ausgestellte Stauchfläche für das stauchende Zurückbiegen des Installationszapfens in das Aufnahmegewinde der Bauteilöffnung. Nach Abschluss des Zurückbiegens des Mitnehmerzapfens wird das Stellglied und damit die Stauchklinge wieder in die Installationsspindel eingezogen, um danach die Installationsspindel aus dem Drahtgewindeeinsatz ausdrehen zu können.

Ein weiterentwickeltes Werkzeug zur Installation eines Drahtgewindeeinsatzes mit zurückbiegbarem Zapfen beschreibt WO 2019/141497. Das Einbauwerkzeug ist durch eine drehende Antriebseinheit, hier ein Elektromotor, angetrieben. Der Elektromotor überträgt mit Hilfe einer Drehmomentkupplung seine Drehung und sein Drehmoment auf die Einbauspindel. Bei Erreichen eines bestimmten Drehmoment-Schwellenwerts, bewirkt die Drehmomentkupplung aufgrund ihrer Konstruktion eine Linearbewegung des innerhalb der hohlzylindrischen Installationsspindel angeordneten Stellglieds. Diese rein mechanisch ausgelöste lineare Bewegung des Stellglieds innerhalb der Installationsspindel bewirkt ein Ausstellen einer Installationsklinge zum Zurückbiegen des Mitnehmerzapfens oder ein Einziehen der Installationsklinge in die Installationsspindel.

Eine Vorrichtung zur Einführung einer schraubenlinienförmig gewundenen Drahtwendel in eine Gewindebohrung ist in CH 261 878 A beschrieben. Die Vorrichtung umfasst eine Hülse, die einen mit Innengewinde und seitlicher Ausnehmung versehenen Endteil aufweist, um die Drahtwendel aufzunehmen und diese bei ihrem Durchgang durch das Innengewinde zu verengen. Die Hülse ist mit einem zweiten zwischen der seitlichen Ausnehmung und dem andern Hülsenende angeordneten Innengewinde versehen. Zudem ist in der Hülse koaxial ein drehbarer und axial verschiebbarer Stab geführt. Das äußere Stabende ist zur Kupplung mit einem reversiblen Antrieb ausgebildet und ein mittlerer Teil des Stabes trägt ein Außengewinde, das mit dem zweiten oben erwähnten Innengewinde in Eingriff treten kann. Alle genannten Gewinde haben die gleiche Steigung.

US 2003/024594 A1 beschreibt eine Vorwickelvorrichtung zum selektiven Anbringen an einem Installationswerkzeug. Die Vorwickelvorrichtung umfasst eine Stützstruktur, die selektiv an dem Installationswerkzeug anbringbar ist, eine Vorspulvorrichtung, die an der Stützstruktur befestigt ist, wobei die Vorspulvorrichtung erste und zweite Gewindeöffnungen aufweist, und einen Dorn mit einem Gewindeende und einem Kupplungsende. Das Gewindeende steht in Gewindeeingriff mit der zweiten Gewindeöffnung. Das Kupplungsende befindet sich in selektivem Wirkeingriff mit dem Antriebswerkzeug, wodurch das Antriebswerkzeug den Dorn relativ zur Vorwickelvorrichtung drehbar antreibt, um den schraubenförmigen Spuleneinsatz durch die zweite Gewindeöffnung drehend anzutreiben, um den schraubenförmigen Spuleneinsatz vorzuspulen.

Im Vergleich zum Stand der Technik stellt sich vorliegende Erfindung das Problem, einen Einbauautomaten für und in Kombination mit einem Einbauwerkzeug für einen Drahtgewindeeinsatz bereitzustellen, der bekannte Installationsvorgänge optimiert und effektiver ausführt.

### 3. Zusammenfassung der Erfindung

Die obige Aufgabe wird durch einen Einbauautomaten gemäß dem unabhängigen Patentanspruch 1 sowie durch ein Installationsverfahren für einen Drahtgewindeeinsatz mit dem genannten Einbauautomaten gemäß dem unabhängigen Patentanspruch 7 gelöst. Vorteilhafte Ausgestaltungen und Weiterentwicklungen vorliegender Erfindung gehen aus der folgenden Beschreibung, den begleitenden Zeichnungen und den anhängenden Patentansprüchen hervor.

Der erfindungsgemäße Einbauautomat ist mit einem Einbauwerkzeug für einen Drahtgewindeeinsatz verbindbar, um den Drahtgewindeeinsatz in einer Gewindebohrung eines Bauteils zu installieren. Dazu weist der erfindungsgemäße Einbauautomat die folgenden Merkmale auf: eine drehende Antriebseinheit, die eine zwischen einer ersten und einer zweiten Drehrichtung umschaltbare Drehbewegung bereitstellt, eine axial versetzbare hohlzylindrische Setzspindel in Drehkopplung mit der drehenden Antriebseinheit, sodass während einer Übertragung einer Drehbewegung von der Antriebseinheit auf die Setzspindel die Setzspindel unabhängig von der Drehbewegung in Längsrichtung versetzbar ist, ein erstes Stellglied, insbesondere ein Pneumatikzylinder mit einem axial bewegbaren Kolben, dessen Wirkrichtung parallel zur Längsrichtung der Setzspindel orientiert ist und der mit der Setzspindel versatzgekoppelt ist, sodass die Setzspindel durch das Stellglied axial versetzbar ist, einen axial versetzbaren Betätigungsdorn, der innerhalb der hohlzylindrischen Setzspindel angeordnet und im Wesentlichen verdrehungsfrei angetrieben oder betätigbar ist, und ein Werkzeugfutter, über welches das Einbauwerkzeug für einen Drahtgewindeeinsatz mit der Setzspindel verbindbar ist.

Mit Hilfe vorliegender Erfindung wird die konstruktive Voraussetzung für einen automatischen Einbau von Drahtgewindeeinsätzen in Gewindebohrungen eines Bauteils geschaffen. Ein derartiger Einbauautomat stellt somit einen weiteren Automatisierungsgrad im Vergleich zu bekannten Handgeräten zur Installation eines Drahtgewindeeinsatzes in einer Gewindebohrung dar. Der erfindungsgemäß bevorzugte Einbauautomat ist derart konfiguriert, dass er mit Einbauwerkzeugen unterschiedlicher Konfiguration und/oder Funktionalität verbindbar ist. Somit stellt der erfindungsgemäße Einbauautomat die Grundlage dafür her, die jeweilige Art von Einbauwerkzeug für den verwendeten Drahtgewindeeinsatz zu betreiben. Denn bekannte Einbauwerkzeuge sind abgestimmt auf einen Drahtgewindeeinsatz mit Installationszapfen oder einen Drahtgewindeeinsatz ohne Installationszapfen oder auf einen Drahtgewindeeinsatz mit einem radial einwärts ragenden gebogenen Installationszapfen.

Der Einbauautomat stellt erfindungsgemäß bevorzugt mit Hilfe einer drehenden Antriebseinheit, vorzugsweise ein Elektromotor oder ein Servomotor, die drehende Bewegung der Setzspindel bereit. Diese drehende Bewegung der Setzspindel wird auf eine Einbauspindel des Einbauwerkzeugs übertragen, um den Drahtgewindeeinsatz auf die Einbauspindel aufzuspindeln, in die Gewindebohrung einzuschrauben und dann die Einbauspindel wieder aus dem installierten Drahtgewindeeinsatz auszuspindeln.

Um die Zustellung der Setzspindel und damit der Installationsspindel mit Drahtgewindeeinsatz zu der Gewindebohrung im Bauteil zu vereinfachen, wird ein erstes Stellglied, vorzugsweise ein erster Pneumatikzylinder mit einem axial bewegbaren Kolben, eingesetzt. Als erstes Stellglied sind elektromagnetische, piezoelektrische, hydraulische und pneumatische Stellglieder bevorzugt. Am Beispiel eines Pneumatikzylinders wird die Funktion des ersten Stellglieds erläutert. Die Wirkung des Pneumatikzylinders ist parallel zur axialen Erstreckung der Setzspindel und somit der Installationsspindel orientiert. Zudem ist der Pneumatikzylinder derart in den Einbauautomaten integriert, dass über seinen axial bewegbaren Kolben die Setzspindel parallel zur Wirkrichtung des Pneumatikzylinders versetzbar bzw. bewegbar ist. Während somit der Installationsvorgang des Drahtgewindeeinsatzes durch die Rotation der drehenden Antriebseinheit realisiert wird, ist der erste Pneumatikzylinder für die Zustellung der Setzspindel in Richtung Gewindebohrung sowie deren Zurückstellung von der Gewindebohrung verantwortlich. Dies reduziert den Abstimmungsaufwand im Vergleich zu bestehenden Systemen, in denen die Zustellung zu der Gewindebohrung beispielsweise über eine Gewindeverbindung der Setzspindel und einem entsprechenden Mutterngewinde realisiert wird. Denn in diesem Fall würde die drehende Antriebseinheit nicht nur für die Installation des Drahtgewindeeinsatzes verantwortlich sein, sondern auch das entsprechende Mutterngewinde zum axialen Versatz, also zur Zustellung und zur Entfernung der Setzspindel von der Gewindebohrung im Bauteil drehen müssen. Die funktionelle Trennung der Zustellung und der drehenden Installation wird dadurch gewährleistet, dass die drehende Antriebseinheit lediglich ein Drehmoment auf die Setzspindel übertragen kann. Das Drehmoment wird bevorzugt mit Hilfe einer Drehmomentkugelbuchse oder Nutwellenführung übertragen, innerhalb derer die Setzspindel axial bewegbar über eine formschlüssige Verbindung gehalten ist.

Am Ende der Setzspindel abgewandt von der drehenden Antriebseinheit ist ein Werkzeugfutter vorgesehen, über welches das Einbauwerkzeug für den Drahtgewindeeinsatz mit der Setzspindel verbindbar ist. Derartige Werkzeugfutter sind bevorzugt unterschiedlich konfiguriert, wie beispielsweise eine Spannzange oder eine Kugelverriegelung. Diese bekannten mechanischen Kopplungskonstruktionen sind dafür ausgelegt, neben einem Drehmoment auch axiale Bewegungen der Setzspindelkonstruktion an das Einbauwerkzeug weiterzugeben.

Basierend auf der hohlzylindrischen Konstruktion der Setzspindel ist innerhalb der Setzspindel ein Betätigungsdorn angeordnet. Dieser Betätigungsdorn ist in Längsrichtung der Setzspindel gezielt versetzbar, um unterschiedliche Funktionalitäten bekannter Einbauwerkzeuge zu realisieren. Dieser axiale Versatz des Betätigungsdorns wird vorzugsweise an eine ebenfalls hohlzylindrisch konstruierte Einbauspindel weitergegeben, die zumindest ein inneres Stellglied oder ein anderes inneres bewegbares Element enthält. Durch die Axialbewegung des Betätigungsdorns, der verdrehungsfrei in der Setzspindel angetrieben ist, wird bevorzugt eine Installationsklinge des Einbauwerkzeugs oder ein Dorn zum Abbrechen des Zapfens des Drahtgewindeeinsatzes oder ähnliches betätigt bzw. bewegt. In diesem Zusammenhang ist es bevorzugt, dass die durch den Betätigungsdorn ausgeführte axiale Bewegung innerhalb der Setzspindel nicht durch die drehende Antriebseinheit erzeugt wird. Das gleiche gilt für den bevorzugten ersten Pneumatikzylinder, also das erste Stellglied, der derart ausgelegt ist, dass er vorzugsweise nur die Setzspindel in ihrer Längsrichtung zustellend oder zurückziehend bewegt.

In Bezug auf das oben genannte Werkzeugfutter ist vorzugsweise die Einbauspindel als Einbauwerkzeug in einem Innensechskant als Werkzeugfutter aufnehmbar. Dadurch wird eine drehfeste Verbindung realisiert. Ein Verstelldorn im Inneren der Einbauspindel koppelt über eine mittige Kugelverriegelung am Betätigungsdorn an.

Gemäß einer bevorzugten Ausgestaltung des Einbauautomaten sind die drehbare Setzspindel und das erste Stellglied, vorzugsweise ein Kolben des ersten Pneumatikzylinders über eine drehentkoppelnde Verbindungseinheit miteinander verbunden, sodass die Setzspindel bei gleichzeitiger Drehung durch die drehende Antriebseinheit durch den ersten Pneumatikzylinder oder allgemein das erste Stellglied linear versetzbar ist.

Die bevorzugte drehentkoppelnde Verbindungseinheit garantiert, dass die drehende Antriebseinheit ihr Drehmoment und der erste Pneumatikzylinder seine lineare Bewegung unabhängig voneinander auf die Setzspindel übertragen können. Diese Bewegungen sind unabhängig voneinander ansteuerbar und realisierbar, sodass gerade auch eine gleichzeitige Nutzung der beiden Bewegungen zu einer Reduktion von Taktzeiten beispielsweise bei der Installation eines Drahtgewindeeinsatzes in einer Bauteilöffnung führen kann.

Gemäß einer bevorzugten Ausgestaltung vorliegender Erfindung weist die drehentkoppelnde Verbindungseinheit zwischen der Setzspindel und dem ersten Stellglied ein zweites, insbesondere integriertes, Stellglied auf, mit dem der Betätigungsdorn innerhalb der Setzspindel linear versetzbar ist.

Während somit erfindungsgemäß bevorzugt Drehmomente der drehenden Antriebseinheit und eine lineare Bewegung des ersten Stellglieds, insbesondere der erste Pneumatikzylinder, auf die Setzspindel übertragbar sind, sorgt das in der drehentkoppelnden Verbindungseinheit angeordnete zweite Stellglied für eine bevorzugt von den weiteren Funktionen und Bewegungen entkoppelte Ansteuerung des Betätigungsdorns in der Setzspindel. Denn die durch das zweite Stellglied innerhalb der drehentkoppelnden Verbindungseinheit erzeugte lineare Bewegung ist unabhängig von der Drehbewegung der drehenden Antriebseinheit und einer linearen Bewegung des ersten Pneumatikzylinders steuerbar und ausführbar. Daraus folgt, dass nicht nur die drehende Bewegung der Antriebseinheit und die lineare Bewegung des ersten Pneumatikzylinders auf effektive Art und Weise miteinander kombiniert und/oder überlagert werden können. Vielmehr ist es ebenfalls bevorzugt, dass auch die lineare Bewegung des Betätigungsdorns innerhalb der hohlzylindrischen Setzspindel zumindest teilweise parallel zur drehenden Bewegung der Antriebseinheit und/oder zur linearen Versatzbewegung des ersten Pneumatikzylinders angesteuert werden kann und stattfinden kann.

Gemäß unterschiedlicher bevorzugter Ausführungsform vorliegender Erfindung ist das zweite Stellglied ein elektromagnetisches Stellglied oder ein piezoelektrisches Stellglied oder ein pneumatisches Stellglied.

Die drehentkoppelnde Verbindungseinheit stellt erfindungsgemäß bevorzugt neben der drehentkoppelnden Verbindung zwischen dem Kolben des ersten Pneumatikzylinders und der drehbar genutzten Setzspindel einen Bauraum bereit, der mit unterschiedlichen funktionellen Komponenten genutzt werden kann. Wesentlich für diese funktionellen Komponenten ist aber, dass sie die axiale Position des Betätigungsdorns innerhalb der Setzspindel durch eine erzeugte Bewegung verändern können.

Gemäß einer bevorzugten Ausgestaltung ist in den Bauraum der Verbindungseinheit ein elektromagnetisches Stellglied oder ein piezoelektrisches Stellglied integriert. Diese lassen sich in bekannter Weise elektrisch ansteuern und verändern basierend auf dem zugeleiteten elektrischen Signal die Länge. Diese Längenänderung wird direkt oder indirekt auf den Betätigungsdorn innerhalb der Setzspindel übertragen, sodass der Betätigungsdorn über die Bewegung des Stellglieds seine axiale Position innerhalb des inneren Kanals der Setzspindel verändert. Entsprechend sorgt vorzugsweise ein elektrisches Signal für eine Bewegung des piezoelektrischen oder elektromagnetischen Stellglieds, sodass der Betätigungsdorn in Richtung einer Installationsrichtung ausfährt. Diese Bewegung wird bevorzugt an das Einbauwerkzeug übertragen, um einen Installationszapfen eines Drahtgewindeeinsatzes zu brechen oder eine Installationsklinge im Einbauwerkzeug auszustellen, um das Zurückbiegen eines zurückbiegbaren Zapfens eines Drahtgewindeeinsatzes vorzubereiten. In gleicher Weise sorgt ein elektrisches Signal für ein Verkürzen des Stellglieds bzw. ein axiales Bewegen des Betätigungsdorns und entsprechend eines bevorzugten Dorns im Einbauwerkzeug, dass dieser wieder in eine Einbauspindel zurückgezogen wird.

Gemäß einer weiteren bevorzugten Ausgestaltung vorliegender Erfindung ist der in der drehentkoppelnden Verbindungseinheit vorhandene Bauraum als Pneumatikzylinder realisiert, in welchem ein Kolben zur Bereitstellung eines zweiten Stellglieds, vorzugsweise ein zweiter Pneumatikzylinder, bewegbar angeordnet ist. Dies eröffnet die Möglichkeit, dass die für den ersten Pneumatikzylinder vorhandene Luftversorgung mit einer eigenen Ventiltechnik auch für das Betreiben eines in der drehungsentkoppelten Verbindungseinheit angeordneten zweiten Pneumatikzylinders verwendet werden kann. Zudem hat ein zweiter Pneumatikzylinder den Vorteil, dass keine elektrischen Zuleitungen zur drehentkoppelnden Verbindungseinheit erforderlich sind. Der zweite Pneumatikzylinder wird mit Hilfe passender Pneumatikanschlüsse versorgt, sodass gezielt eine Axialbewegung in Installationsrichtung des Drahtgewindeeinsatzes oder entgegen einer Installationsrichtung ansteuerbar sind.

Gemäß einer weiteren bevorzugten Ausgestaltung vorliegender Erfindung ist das pneumatische Stellglied innerhalb der drehentkoppelten Verbindungseinheit ein doppelt wirkender Pneumatikzylinder oder ein einfach wirkender Pneumatikzylinder mit Federrückstellung.

Die Nutzung eines zweiten Pneumatikzylinders in einer Parallelschaltung zum ersten Pneumatikzylinder als Stellglied für den Betätigungsdorn innerhalb der Setzspindel lässt sich gemäß einer ersten bevorzugten Ausgestaltung vorliegender Erfindung mit Hilfe eines einfach wirkenden Pneumatikzylinders mit Federrückstellung realisieren. Das bedeutet, dass der Pneumatikzylinder mit Hilfe eines zuschaltbaren Luftdrucks gezielt in nur eine Richtung bewegbar ist. In diesem Zusammenhang bietet sich eine Konfiguration des einfach wirkenden Pneumatikzylinders an, welche eine Bewegung in Installationsrichtung aufgrund eines angelegten Steuerdrucks erzeugt. Diese Bewegung lässt sich vorzugsweise mit einer Kraft entsprechend der Höhe des aufgebrachten Luftdrucks ausführen. Eine Nutzungsmöglichkeit besteht (siehe oben) darin, auf diese Weise mit Hilfe des Betätigungsdorns einen Zapfen des Drahtgewindeeinsatzes zu brechen. Eine weitere Möglichkeit besteht darin, eine Installationsklinge des Einbauwerkzeugs auszustellen. Sobald der Betätigungsdorn in seine Ausgangsposition zurückkehren soll, wird der wirkende Druck auf den zweiten Pneumatikzylinder, hier als einfach wirkender Pneumatikzylinder ausgeführt, abgeschaltet. Da der Kolben des zweiten Pneumatikzylinders vorzugsweise federvorgespannt entgegen der Richtung der wirkenden Druckluft angeordnet ist, bewirkt die wirkende Federvorspannung bei Abschalten des Luftdrucks eine Bewegung des Kolbens in seine Ausgangsposition, also entgegen der Installationsrichtung. Diese Konfiguration des Stellglieds erzielt vorzugsweise eine effektive Auslenkung des Betätigungsdorns und der daran angeschlossenen Komponenten des Einbauwerkzeugs. Gleichzeitig ist ebenfalls sichergestellt, dass ohne großen Schaltungs- und Steueraufwand, das Stellglied in seine Ausgangsposition mit Hilfe der wirkenden Federvorspannung zurückgeführt wird.

Gemäß einer weiteren bevorzugten Ausgestaltung vorliegender Erfindung weist der zweite Pneumatikzylinder in seiner parallel geschalteten Anordnung zum ersten Pneumatikzylinder die Konfiguration eines doppelt wirkenden Pneumatikzylinders auf. Doppelt wirkender Pneumatikzylinder bedeutet in diesem Zusammenhang, dass ein erster wirkender Luftdruck für die Verstellung des Stellglieds in Installationsrichtung verwendet wird, während ein zweiter wirkender Luftdruck das Stellglied bzw. den Kolben des zweiten Pneumatikzylinders in seine Ausgangsposition zurück bewegt. Im Vergleich zur oben beschriebenen Federrückstellung des einfach wirkenden Pneumatikzylinders ist somit ein pneumatischer Steuerdruck erforderlich, der einerseits die Bewegung in Installationsrichtung steuert und andererseits die Bewegung entgegen der Installationsrichtung bewirkt.

Wenn bevorzugt ein zweiter pneumatischer Zylinder als Stellglied in der drehentkoppelnden Verbindungseinheit verwendet wird, ist es erforderlich, dass eine pneumatisch abgedichtete Verbindung zwischen der Setzspindel und der Verbindungseinheit bzw. dessen Aufnahmeraum vorliegt. In diesem Fall ist die drehentkoppelnde Verbindungseinheit ähnlich einer pneumatischen Drehdurchführung konstruiert. Denn die zur Steuerung des zweiten Pneumatikzylinders erforderliche Luft wird durch die Verbindungskomponente hindurch geführt. Zudem findet zwischen dem Kolben des ersten Pneumatikzylinders und der sich drehenden Setzspindel eine Entkopplung zur Drehbewegung der Setzspindel statt.

Gemäß einer weiteren bevorzugten Ausgestaltung vorliegender Erfindung ist das Werkzeugfutter zur Verbindung mit einem Einbauwerkzeug für den Drahtgewindeeinsatz als eine Kugelverriegelung oder als eine Spannzange für eine Einbauspindel des Einbauwerkzeugs realisiert.

Eine Kugelverriegelung sowie eine Spannzange sind bekannte mechanische Konstruktionen. Diese stellen einerseits eine lösbare Verbindung zu einer Einbauspindel des Einbauwerkzeugs her. Zudem sind die Kugelverriegelung und auch die Spannzange mit einem geeigneten Formschluss kombinierbar, sodass auch die Drehung der Setzspindel auf die Einbauspindel des Einbauwerkzeugs übertragbar ist. In diesem Zusammenhang ist es ebenfalls bevorzugt, dass neben der Einbauspindel auch ein beispielsweise in der Einbauspindel geführter Verstelldorn mit einer Kugelverriegelung oder einer Spannzange mit dem Einbauautomaten verbunden wird.

Gemäß einer weiteren bevorzugten Ausgestaltung weist der Einbauautomat ein Einbauwerkzeug auf, wie es in WO 2018/114122 A1 beschrieben ist. In WO 2018/114122 A1 ist ein Einbauwerkzeug für einen Drahtgewindeeinsatz mit zurückbiegbarem Zapfen beschrieben. In einem Spindelkörper ist ein linear verstellbares Stellglied angeordnet, mit dem eine Mitnahme- und/oder Stauchklinge aus dem Spindelkörper ausstellbar und in diesen einziehbar ist.

Vorliegende Erfindung offenbart zudem ein Installationsverfahren für einen Drahtgewindeeinsatz in einer Gewindebohrung eines Bauteils mit einem Einbauautomaten, insbesondere ein Einbauautomat gemäß einer der obigen Ausführungsformen, welches die folgenden Schritte aufweist: Aufspindeln eines Drahtgewindeeinsatzes auf einer Einbauspindel eines mit einer Setzspindel verbundenen Einbauwerkzeugs, in dem eine drehende Antriebseinheit die Setzspindel dreht, Zustellen der Einbauspindel mit dem aufgespindelten Drahtgewindeeinsatz zu der Gewindebohrung mit einem ersten Stellglied, bevorzugt ein erster Pneumatikzylinder, der die Setzspindel in Längsrichtung versetzt, Drehen der Setzspindel in eine erste Drehrichtung, um den Drahtgewindeeinsatz in die Gewindebohrung einzudrehen, Ausstellen eines innerhalb der Setzspindel angeordneten Betätigungsdorns über ein zweites Stellglied, welches in einer drehentkoppelten Verbindungseinheit zwischen der Setzspindel und dem ersten Stellglied angeordnet ist, um einen Zapfen des Drahtgewindeeinsatzes zu bearbeiten, Drehen der Setzspindel in einer zweiten Drehrichtung, um die Einbauspindel aus der Gewindebohrung auszudrehen.

Das erfindungsgemäße Installationsverfahren für den Drahtgewindeeinsatz baut auf einer effektiven Organisation verschiedener Installationsbewegungen auf. Diese Installationsbewegungen sind teilweise gleichzeitig realisierbar, da die bevorzugten drei Antriebseinheiten für die Installation des Drahtgewindeeinsatzes in der Gewindebohrung des Bauteils genutzt werden. Denn während das erste Stellglied, vorzugsweise der erste Pneumatikzylinder, eine effektive Zustellung der Setzspindel zur Gewindebohrung des Bauteils realisiert, ist die drehende Antriebseinheit allein für das Abspindeln und Eindrehen des Drahtgewindeeinsatzes in die Gewindebohrung verantwortlich. Diese Trennung hat bereits den Vorteil, dass die drehende Bewegung der Antriebseinheit nicht mit einer angepassten Gewindeverbindung zwischen der Setzspindel und einer drehenden Komponente der Antriebseinheit eine geradlinige Zustellbewegung der Setzspindel zur Gewindebohrung realisieren muss. Zudem garantiert bevorzugt das Stellglied der drehentkoppelten Verbindungseinheit einen nahtlosen Übergang zwischen einer Eindrehbewegung der Setzspindel und einem sich daran anschließenden Betätigungsschritt für den Betätigungsdorn innerhalb der Setzspindel. Denn mit Hilfe des effektiven Ausstellens des Betätigungsdorns in Installationsrichtung lässt sich beispielsweise eine Installationsklinge zeitlich effektiver positionieren oder ein Installationszapfen direkt anschließend an das Eindrehen brechen. Somit gewährleistet die Kombination aus zwei eigenständig wirkenden und mit unterschiedlichen Komponenten des Einbauautomaten kooperierenden Stellgliedern, vorzugsweise Pneumatikzylinder, einen effektiven Ablauf des Installationsverfahrens. Diese Effektivität wird zusätzlich dadurch unterstützt, dass das unabhängig von dem ersten Stellglied arbeitende zweite Stellglied weitere Installationsschritte mit dem Einbauwerkzeug übernehmen kann.

Gemäß einer bevorzugten Ausgestaltung des erfindungsgemäßen Installationsverfahrens umfasst die drehentkoppelnde Verbindungseinheit einen einfach wirkenden Pneumatikzylinder mit Federrückstellung oder einen doppelt wirkenden Pneumatikzylinder als zweites Stellglied und das Installationsverfahren weist vorzugsweise den weiteren Schritt auf: Zuschalten eines Pneumatikdrucks zum einfach wirkenden Pneumatikzylinder oder zum doppelt wirkenden Pneumatikzylinder, wodurch der Betätigungsdorn in der Setzspindel aus einer Ausgangsposition ausgestellt wird, und Abschalten des Pneumatikdrucks im einfach wirkenden Pneumatikzylinder und Federrückstellen des Betätigungdorns in die Ausgangsposition oder Abschalten des Pneumatikdruck in einer ersten Kammer des doppelt wirkenden Pneumatikzylinders und Zuschalten eines Pneumatikdrucks in einer zweiten Kammer des doppelt wirkenden Pneumatikzylinders und dadurch Zurückstellen des Betätigungsdorns in die Ausgangsposition.

Alternativ zur Verwendung eines pneumatischen zweiten Stellglieds in Form eines einfach oder eines doppelt wirkenden Pneumatikzylinders weist die drehentkoppelnde Verbindungseinheit ein piezoelektrisches oder ein elektromagnetisches zweites Stellglied als Stellglied auf. In diesem Zusammenhang umfasst das Installationsverfahren bevorzugt den weiteren Schritt: Weiterleiten eines elektrischen Signals an das elektromagnetische Stellglied, wodurch das Stellglied betätigt und der Betätigungsdorn in der Setzspindel aus einer Ausgangsposition ausgestellt wird, und Abschalten des elektrischen Signals für das zweite Stellglied, wodurch das zweite Stellglied zurückgestellt wird und den Betätigungsdorn in die Ausgangsposition mitführt oder wodurch das zweite Stellglied und der Betätigungsdorn federrückgestellt werden.

### 4. Kurze Beschreibung der begleitenden Zeichnungen

Die bevorzugten Ausführungsformen vorliegender Erfindung werden unter Bezugnahme auf die begleitende Zeichnung näher erläutert. Es zeigen:
- Figur 1: eine bevorzugte Ausführungsform eines in einem Maschinenrahmen angeordneten und automatisch gesteuerten Einbauautomaten zur Installation von Drahtgewindeeinsätzen in einer Gewindebohrung eines Bauteils,
- Figur 2: eine vergrößerte Darstellung des Einbauautomaten gemäß Figur 1, der mit unterschiedlichen Ausgestaltungen des Einbauwerkzeugs für den Drahtgewindeeinsatz kombinierbar ist, welche als alternative Ausgestaltungen nebeneinander gezeigt sind,
- Figur 3: eine vergrößerte Darstellung des Einbauautomaten gemäß Figur 1,

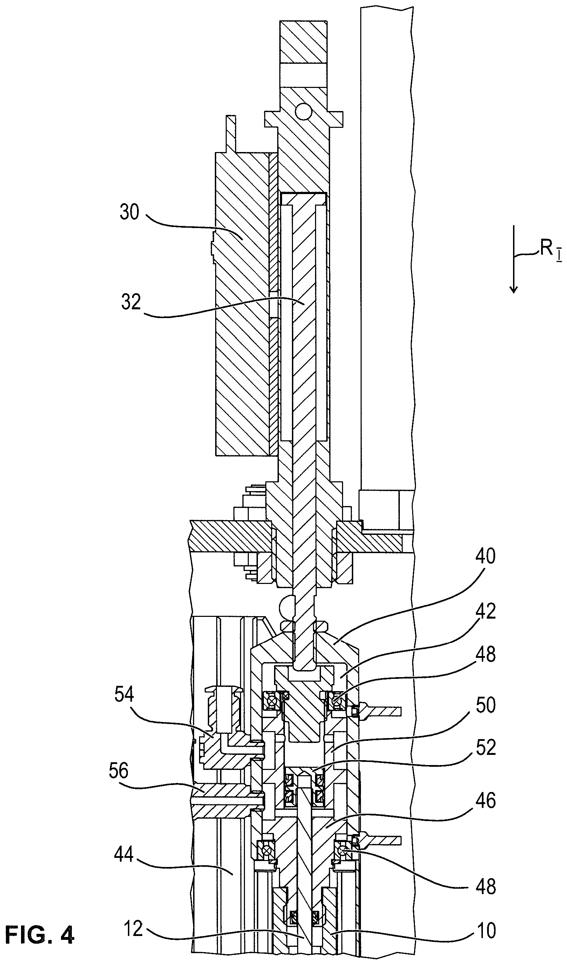

- Figur 4: eine Ausschnittsvergrößerung aus der Darstellung in Figur 3, welche den ersten Pneumatikzylinder in Kombination mit der drehentkoppelten Verbindungskomponente zeigt,
- Figur 5: eine bevorzugte Ausgestaltung der drehentkoppelten Verbindungseinheit mit einem doppelt wirkenden Pneumatikzylinder als Stellglied,
- Figur 6: eine bevorzugte Ausgestaltung der drehentkoppelten Verbindungseinheit mit einem einfach wirkenden Pneumatikzylinder als Stellglied,
- Figur 7: eine bevorzugte Ausführungsform der drehentkoppelten Verbindungseinheit mit einem elektromagnetischen oder piezoelektrischen inneren Stellglied,
- Figur 8: eine vergrößerte Darstellung der bevorzugten Setzspindel geführt in einer Kugelbuchse mit dem Werkzeugfutter,
- Figur 9: eine perspektivische Darstellung einer bevorzugten Ausführungsform eines Einbauwerkzeugs,
- Figur 10: eine Schnittdarstellung des bevorzugten Werkzeugfutters und des Einbauwerkzeugs zur Illustration der Verbindung zwischen Einbauautomat und Einbauwerkzeug,
- Figur 11: ein Flussdiagramm einer bevorzugten Ausführungsform des erfindungsgemäßen Installationsverfahrens für einen Drahtgewindeeinsatz in eine Gewindebohrung eines Bauteils mit einem Einbauautomaten.

### 5. Detaillierte Beschreibung der bevorzugten Ausführungsformen

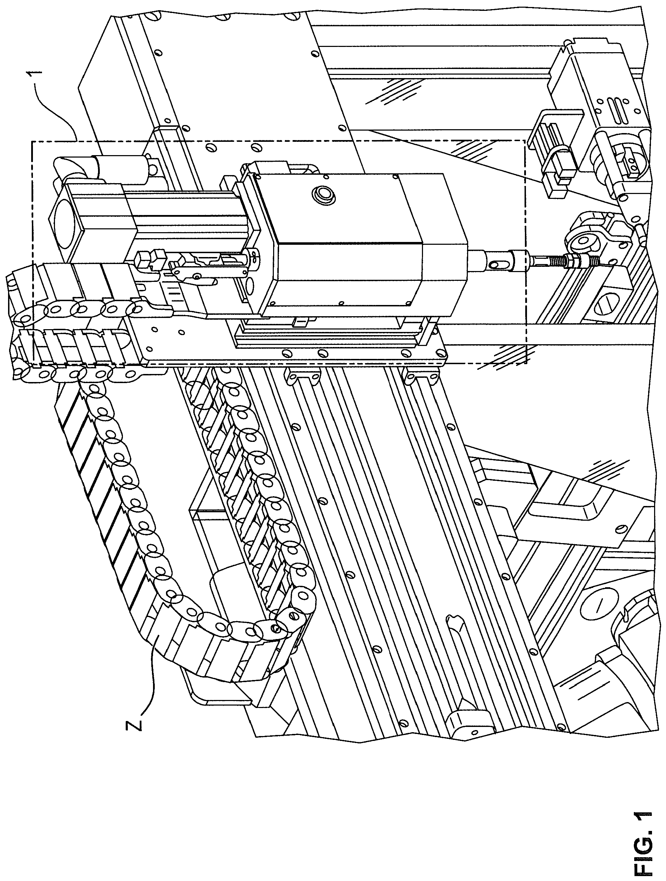

Figur 1 zeigt eine bevorzugte Ausführungsform eines Einbauautomaten 1. Dieser ist in eine Zustellvorrichtung Z integriert, mit der der Einbauautomat 1 in allen drei Raumrichtungen gezielt verfahrbar ist.

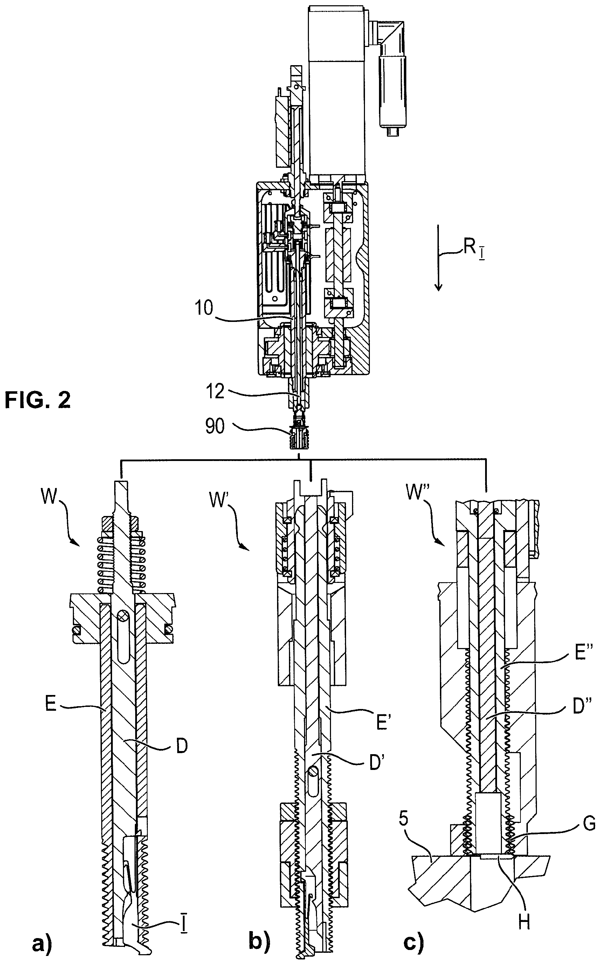

Eine schematische Schnittdarstellung des Einbauautomaten 1 aus Figur 1 zeigt Figur 2 in alternativen Ausgestaltungen. Der Einbauautomat 1 realisiert allgemein eine genaue Zustellung, Positionierung und Antrieb eines Einbauwerkzeugs W, welches einen Drahtgewindeeinsatz in einer Bohrung eines Bauteils installiert. Vorzugsweise handelt es sich um eine Gewindebohrung, die als Durchgangsbohrung oder als Sacklochbohrung ausgeführt ist.

Der zu installierende Drahtgewindeeinsatz (nicht gezeigt) ist gemäß unterschiedlicher bekannter Konstruktionen aufgebaut. Nach der Konstruktion des Drahtgewindeeinsatzes richtet sich das Einbauwerkzeug W, das über ein Werkzeugfutter 90 mit dem Einbauautomaten 1 lösbar verbunden ist. Das Werkzeugfutter 90 ist vorzugsweise als Spannzange oder als Kugelverriegelung ausgeführt. Zudem stellt das Werkzeugfutter 90 eine drehfeste Verbindung zwischen einer Setzspindel 10 des Einbauautomaten 1 und einer Einbauspindel E; E`; E" des Einbauwerkzeugs W; W`; W" her. Über die drehfeste Verbindung wird eine Drehung der Setzspindel 10 auf die Einbauspindel E; E`; E" übertragen.

Gleichzeitig realisiert das Werkzeugfutter 90 eine Verbindung zwischen einem innerhalb der Setzspindel 10 angeordneten Betätigungsdorn 12 und einem Verstelldorn D; D`; D" in der Einbauspindel E; E`; E". Der Verstelldorn D; D`; D" ist vorzugsweise über eine Kugelverriegelung mit dem Betätigungsdorn 12 verbunden. Dies schafft die konstruktive Grundlage, um den Verstelldorn D; D`; D" gemeinsam mit dem Betätigungsdorn 12 linear in eine Installationsrichtung R_{I} eines Drahtgewindeeinsatzes und entgegengesetzt dazu zu verstellen.

Da mit dem Einbauautomat 1 eine Drehbewegung der Setzspindel 10 sowie eine Linearbewegung des Betätigungsdorns 12 auf das verbundene Einbauwerkzeug W; W`; W" übertragbar sind, ist der Einbauautomat 1 mit einem Einbauwerkzeug W; W`; W" unterschiedlicher Konstruktion verbindbar. Gemäß einer bevorzugten Ausführungsform (siehe Figur 2a) ist der Einbauautomat 1 mit einem Einbauwerkzeug W verbunden, wie es in WO 2018/114122 A1 beschrieben ist. Innerhalb der Einbauspindel E ist der Verstelldorn D angeordnet. Durch die lineare Bewegung des Verstelldorns D ist eine Installationsklinge I aus der Einbauspindel E ausstellbar und wieder in die Einbauspindel E einziehbar.

Eine weitere bevorzugte Konstruktion des Einbauautomaten 1 und eines Einbauwerkzeugs W` zeigt Figur 2b. Das gezeigte Einbauwerkzeug W' ist in WO 2019/141497 in Kombination mit einer Antriebseinheit beschrieben. Die offenbarte Einbauspindel E' mit Verstelldorn D' aber ohne Antriebseinheit ist mit dem Einbauautomaten 1 kombinierbar.

Die Einbauwerkzeuge W und W` sind bevorzugt dafür geeignet, einen Drahtgewindeeinsatz mit zurückbiegbarem Zapfen gemäß EP 2 637 825 B1 zu installieren.

Figur 2c zeigt ein Einbauwerkzeug W" gemäß EP 1 084 800 B1 bestehend aus einer Einbauspindel E" und einem Verstelldorn D". Während die Einbauspindel E" durch die Setzspindel 10 gedreht wird, ist der Verstelldorn D" mithilfe des Betätigungsdorns 12 linear in Installationsrichtung R_{I} und zurück versetzbar. Die Bewegung des Betätigungsdorns 12 und somit des Verstelldorns D" wird genutzt, um bei der Installation eines Drahtgewindeeinsatzes G mit radial einwärts ragendem Installationszapfen Z diesen zu brechen.

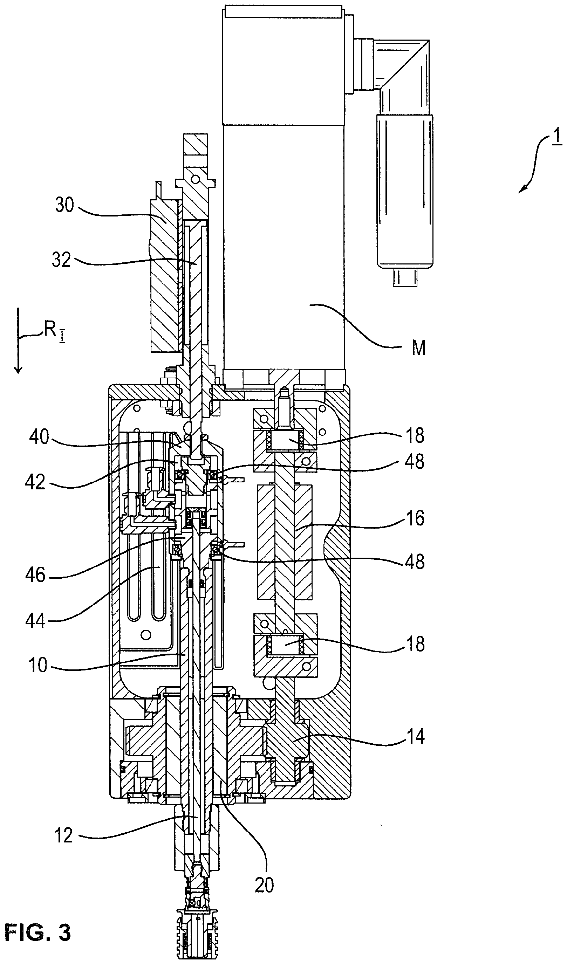

Eine vergrößerte Darstellung des Einbauautomaten 1 der Figuren 1 und 2 zeigt Figur 3 in einer schematischen Schnittdarstellung. Eine Antriebseinheit M in Form eines Motors, vorzugsweise ein Elektromotor wie ein Drehstrom-Synchronmotor, erzeugt die Rotation der Setzspindel 10. Zur Unterstützung des Betriebs des Einbauautomaten 1 ist der bevorzugte Drehstrom-Synchronmotor M gemäß einer Ausgestaltung positionsüberwacht. Das bedeutet, dass die jeweilige Position des Drehstrom-Synchronmotors erfasst und an eine Steuereinheit weitergegeben wird.

Eine Drehung des Motors M in eine erste und eine entgegengesetzt zweite Drehrichtung wird über ein Getriebe 14, vorzugsweise ein Untersetzungsgetriebe, auf die Setzspindel 10 übertragen.

Zur Erfassung eines durch den Motor M erzeugten Drehmoments ist dem bevorzugten Untersetzungsgetriebe 14 ein Drehmomentsensor 16 vorgeschaltet. Das erfasste Drehmoment wird ebenfalls bevorzugt an die Steuereinheit S übermittelt und dort überwacht.

Um das vom Motor M erzeugte Drehmoment zu dämpfen, ist der Drehmomentsensor 16 vorzugsweise durch zwei Klauenkupplungen 18 eingefasst. Diese vermeiden eine übermäßige Belastung des Getriebes 14 durch Drehmomentspitzen erzeugt durch den Motor M.

Um die Drehbewegung und das Drehmoment des Motors M auf die Setzspindel 10 zu übertragen, ist das bevorzugte Untersetzungsgetriebe 14 über eine Kugelbuchse 20 mit der Setzspindel 10 verbunden. Die Kugelbuchse 20 bekannter Konstruktion ist formschlüssig mit der Setzspindel 10 verbunden. Dadurch ist die Setzspindel 10 innerhalb der Kugelbuchse 20 in Installationsrichtung R_{I} oder in Längsrichtung der Setzspindel 10 linear versetzbar. Eine weitere formschlüssige Verbindung zwischen dem bevorzugten Untersetzungsgetriebe 14 und der Kugelbuchse 20 stellt sicher, dass die Drehbewegung und das Drehmoment des Motors M auf die Setzspindel 10 übertragbar sind. Basierend auf dieser Konstruktion ist bei Drehung der Setzspindel 10 auch ein linearer Versatz der Setzspindel 10 innerhalb der Kugelbuchse 20 in Installationsrichtung R_{I} und entgegengesetzt dazu realisierbar.

Um die Setzspindel 10 in oder entgegen der Installationsrichtung R_{I} linear zu bewegen, ist ein erstes Stellglied, hier vorzugsweise ein erster Pneumatikzylinder 30 vorgesehen. Der erste Pneumatikzylinder 30 umfasst einen Kolben 32. Vorzugsweise ist der Kolben 32 des ersten Pneumatikzylinders 30 als doppelt wirkender Zylinder in zwei Richtungen parallel zu Installationsrichtung R_{I} gezielt bewegbar. Es ist ebenfalls bevorzugt, den ersten Pneumatikzylinder 30 als einfach wirkenden Pneumatikzylinder mit Federrückstellung entgegen der Installationsrichtung R_{I} vorzusehen (nicht gezeigt).

Da der erste Pneumatikzylinder 30 als Linearstellglied wirkt, ist er gemäß weiterer bevorzugter Ausgestaltungen als elektromagnetisches oder elektrisches oder als piezoelektrisches Stellglied realisierbar.

Die lineare Auslenkung des Kolbens 32 des ersten Pneumatikzylinders 30 versetzt die Setzspindel 10 in Installationsrichtung R_{I} oder entgegengesetzt dazu. Auf diese Weise stellt der erste Pneumatikzylinder 30 bevorzugt die Setzspindel 10 und damit das verbundene Einbauwerkzeug W; W'; W" über eine nicht drehende geradlinige Bewegung einer Gewindebohrung in einem Bauteil zu. Mit der Setzspindel 10 wird auch der Betätigungsdorn 12 mitgeführt, der innerhalb der Setzspindel 10 angeordnet ist.

Erst mit dem beginnenden Eindrehen eines auf der Einbauspindel E; E`; E" angeordneten Drahtgewindeeinsatzes in die Gewindeöffnung, versetzt der Motor M über das Untersetzungsgetriebe 14 die Setzspindel 10 und damit die Einbauspindel E; E`; E" in Drehung. Das Einschrauben bzw. Eindrehen des Drahtgewindeeinsatzes in die Gewindebohrung wird vorzugsweise allein durch die Drehung der Setzspindel 10 realisiert. Dabei zieht ein Innengewinde der Gewindebohrung des Bauteils durch die Drehung der Setzspindel 10 den Drahtgewindeeinsatz mit Einbauspindel E; E`; E" in die Gewindebohrung hinein. Zu diesem Zeitpunkt ist der erste Pneumatikzylinder 30 vorzugsweise drucklos. Es ist ebenfalls bevorzugt, mit einer kraftunterstützten Versatzbewegung des ersten Pneumatikzylinders 30 bzw. des ersten Stellglieds in Installationsrichtung R_{I} das Eindrehen des Drahtgewindeeinsatzes in die Gewindebohrung zu unterstützen.

Vorzugsweise ist der Pneumatikzylinder 30 über einen Druckminderer in einer Maximalkraft einstellbar. Ebenfalls bevorzugt weist der erste Pneumatikzylinder 30 einen Positionssensor auf. Dieser erfasst den absoluten Versatz des Kolbens 32, der auf den Versatz der Einbauspindel 10 und einer Einbautiefe eines Drahtgewindeeinsatzes Z in eine Bauteilöffnung kalibrierbar ist. Da zudem bevorzugt die Einbauspindel 10 bei einem Eindrehen des Drahtgewindeeinsatzes in eine Gewindebohrung den Kolben 32 des ersten Pneumatikzylinders mit in Installationsrichtung R_{I} versetzt, lässt sich mithilfe des Positionssensors bestimmen, wie tief der Drahtgewindeeinsatz in die Gewindebohrung gesetzt worden ist.

Die Setzspindel 10, die linear bewegbar durch und mit dem Kolben 32 des ersten Pneumatikzylinders 30 angeordnet ist, ist über eine drehentkoppelnde Verbindungseinheit 40 mit dem Kolben 32 oder allgemein mit dem ersten Pneumatikzylinder 30 verbunden. Die drehentkoppelnde Verbindungseinheit 40 ist mit dem Kolben 32 verbunden. Über diese Verbindung wird die lineare Bewegung des Kolbens 32 auf die Verbindungseinheit 40 und dann auf die Setzspindel 10 übertragen.

Die Verbindungseinheit 40 definiert vorzugsweise einen inneren Aufnahmeraum 42. Während der Kolben 32 an einem ersten axialen Ende der Verbindungseinheit 40 befestigt ist, ist mit einem zweiten, dem ersten gegenüberliegenden axialen Ende, die Setzspindel 10 verbunden. Vorzugsweise ist die Verbindungseinheit 40 nicht drehbar angeordnet. Zu diesem Zweck ist sie in einer Kulissenführung 44 geführt. Diese weist mindestens einen Führungsschlitz auf, der parallel zur Installationsrichtung R_{I} verläuft und die Verbindungseinheit 40 gegen Verdrehen festhält.

Die Setzspindel 10 ist ebenfalls bevorzugt mit einem Rotationszylinder 46 verbunden. Der Rotationszylinder 46 ist frei drehbar im Aufnahmeraum 42 angeordnet und verbindet die Verbindungseinheit 40 mit der Setzspindel 10. Zur bevorzugten Unterstützung der Drehung des Rotationszylinders 46 in der Verbindungseinheit 40 sind Rillenkugellager 48 vorgesehen.

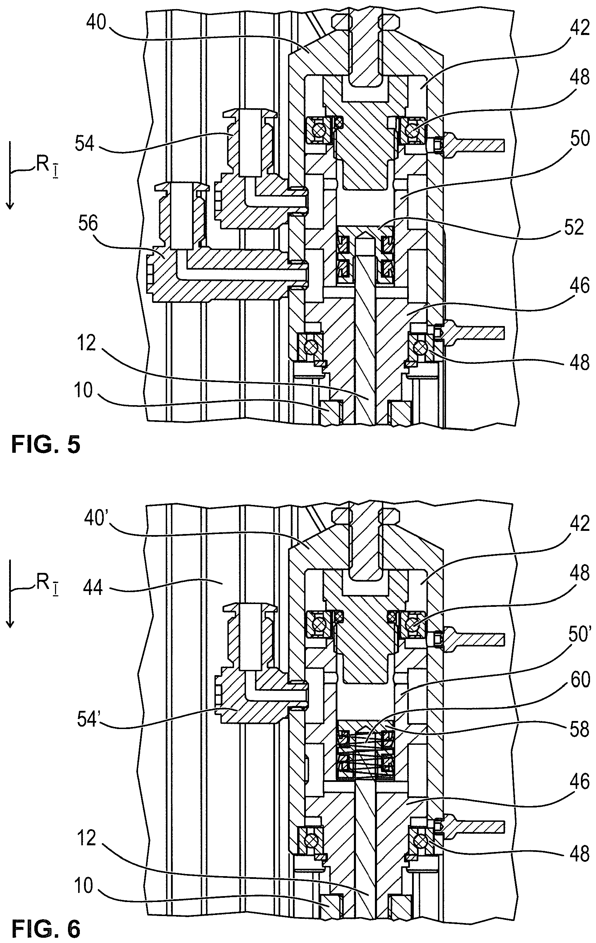

Der Betätigungsdorn 12 im Inneren der Setzspindel 10 ist im Aufnahmeraum 42 der Verbindungseinheit 40 mit einem Stellglied 50; 50`; 50" verbunden. Eine vergrößerte Darstellung der Verbindungseinheit 40 mit unterschiedlichen bevorzugten Stellgliedern 50; 50`; 50" ist in den Figuren 5 bis 7 dargestellt.

Wie unten bereits beschrieben worden ist, besteht das Einbauwerkzeug W; W`; W" zumindest aus einer drehbaren Einbauspindel E. Im Inneren der Einbauspindel E ist der geradlinig versetzbare bzw. bewegbare Verstelldorn D angeordnet. Dieser wird entsprechend dem Aufbau des Einbauwerkzeugs W; W`; W" zum Ausstellen und Einziehen einer Installationsklinge I oder zum Brechen eines Zapfens Z am Drahtgewindeeinsatz G verwendet. Die lineare Betätigung des Verstelldorns D wird durch den Betätigungsdorn 12 erzeugt. Die Drehung der Einbauspindel E erzeugt die Setzspindel 10.

Um die Setzspindel 10 und den Betätigungsdorn 12 und damit die angeschlossene Einbauspindel E und den Verstelldorn D getrennt ansteuern und bewegen zu können, ist die drehentkoppelnde Verbindungseinheit 40 vorgesehen. Denn die drehentkoppelnde Verbindungseinheit 40 stellt einerseits die Drehung der Setzspindel 10 bei gleichzeitiger linearer Bewegung mithilfe des ersten Pneumatikzylinders 30 sicher. Parallel dazu gewährleistet das Stellglied 50; 50`; 50" in der drehentkoppelnden Verbindungseinheit 40, dass der Betätigungsdorn 12 linear in oder entgegen der Installationsrichtung R_{I} versetzt werden kann. Im Aufnahmeraum 42 der Verbindungseinheit 40 und 40' der Figuren 5 und 6 ist jeweils ein zweites Stellglied 50 und 50', vorzugsweise ein pneumatisches, angeordnet.

Das pneumatische Stellglied 50 besteht vorzugsweise aus einem doppelt wirkenden zweiten Pneumatikzylinder. Der doppelt wirkende zweite Pneumatikzylinder 50 besteht aus einem doppelt wirkenden Kolben 52, der im Aufnahmeraum 42 der Verbindungseinheit 40 als Zylinder läuft. Die unterschiedlichen Seiten des doppelt wirkenden Kolbens 52 lassen sich gezielt über zwei Druckluftanschlüsse 54, 56 anströmen. Wird der Druckluftanschluss 54 mit Luftdruck beaufschlagt, bewegt sich der doppelt wirkende Kolben 52 und der mit ihm verbundene Betätigungsdorn 12 in Installationsrichtung R_{I}. Wird der Druckluftanschluss 56 mit Druckluft beaufschlagt, wird dadurch vorzugsweise eine Rückstellung des doppelt wirkenden Kolbens 52 und damit des Betätigungsdorns 12 entgegen der Installationsrichtung R_{I} erzeugt.

In Figur 6 ist das pneumatische Stellglied 50' vorzugsweise als ein einfach wirkender Pneumatikzylinder 50' mit Federrückstellung realisiert. Der einfach wirkende Kolben 58 wird über den Druckluftanschluss 54` mit Druckluft beaufschlagt. Dadurch wird der einfach wirkende Kolben 58 gemeinsam mit dem Betätigungsdorn 12 in Installationsrichtung R_{I} versetzt. Für eine Rückstellung des einfach wirkenden Kolbens 58 wird vorzugsweise der Luftdruck am Druckluftanschluss 54` reduziert oder abgeschaltet. Eine den einfach wirkenden Kolben 58 vorspannende Feder 60 kann sich dadurch entspannen und den Kolben 58 entgegen der Installationsrichtung R_{I} zurückstellen.

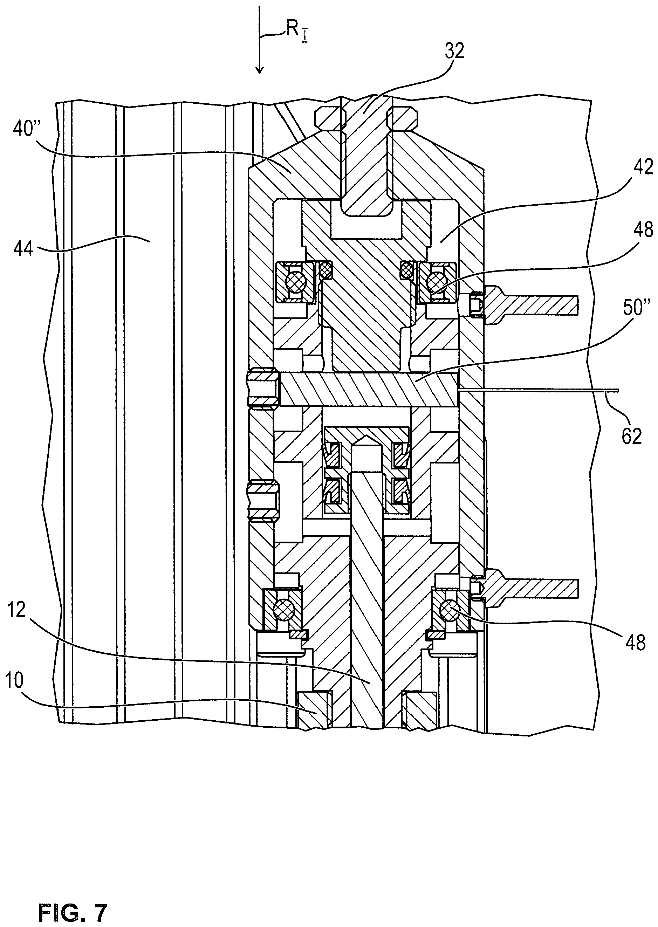

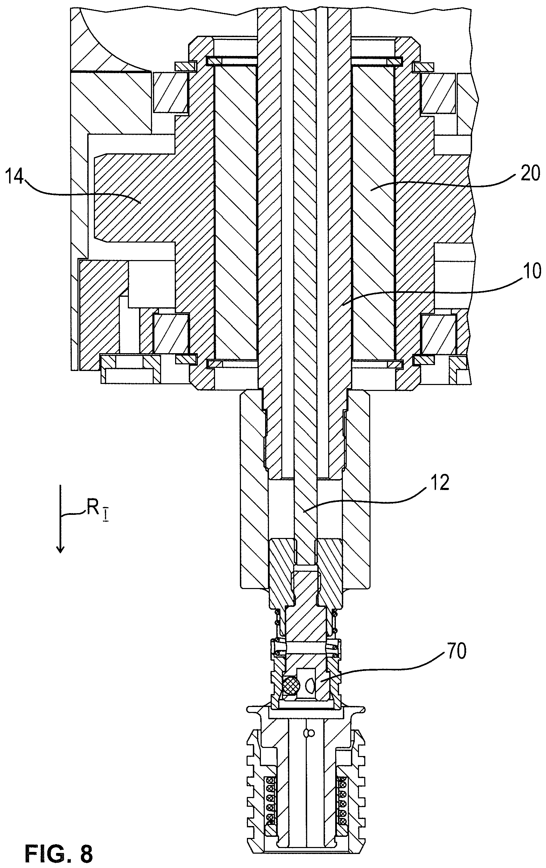

Eine weitere bevorzugte Ausführungsform des zweiten Stellglieds 50" zeigt Figur 7. Im Aufnahmeraum 52 der Verbindungseinheit 40" ist ein elektromagnetisches oder ein piezoelektrisches Stellglied 50" angeordnet. Dieses wird vorzugsweise über elektrische Versorgungsleitungen 62 oder mithilfe einer drahtlosen Verbindung angesteuert. Die Versorgungsleitungen 62 sind derart konstruiert, dass sie eine Bewegung der Verbindungseinheit 40" nicht behindern oder durch diese beschädigt werden. Je nach elektrischer Ansteuerung lenkt das Stellglied 50" in Installationsrichtung R_{I} aus, um den Betätigungsdorn 12 zu betätigen. Bei entgegengesetzter elektrischer Ansteuerung bewegt das Stellglied 50" den Betätigungsdorn 12 entgegen der Installationsrichtung R_{I} vorzugsweise in einer Ausgangsposition. Bezugnehmend auf Figur 8 wird der Betätigungsdorn 12 vorzugsweise über eine Kugelverriegelung 70 mit dem Verstelldorn (nicht gezeigt) verbunden.

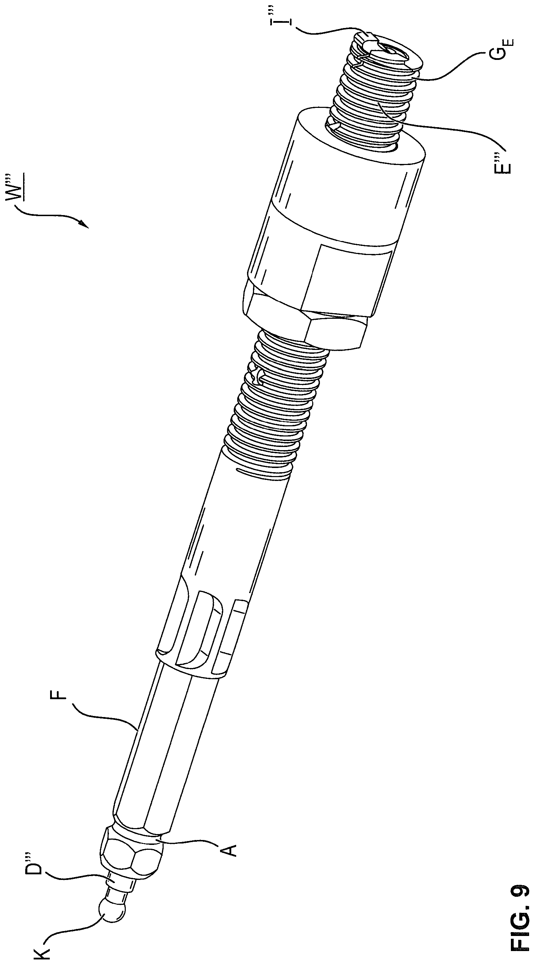

Figur 9 zeigt eine bevorzugte Ausführungsform des Einbauwerkzeugs W‴. Dieses Einbauwerkzeug W‴ ist in größerem Detail und in anderen bevorzugten Ausgestaltungen in WO 2018/114122 A1 erläutert,

Die perspektivische Darstellung des Einbauwerkzeugs W‴ in Figur 9 zeigt die Einbauspindel E‴ mit Außengewinde G_{E}. Auf das Außengewinde G_{E} wird ein Drahtgewindeeinsatz (nicht gezeigt) aufgespindelt, um diesen in eine Gewindebohrung eines Bauteils einzuschrauben.

Die Einbauspindel E‴ hat an einer in Installationsrichtung R_{I} vorauseilenden axialen Stirnseite ein Fenster. Durch dieses Fenster wird die Installationsklinge I‴ mithilfe des Betätigungsdorns 12 und des Verstelldorns D‴ aus der Einbauspindel E‴ ausgestellt und in sie zurückgezogen. Wenn sich die Installationsklinge I‴ in der Einbauspindel E‴ befindet, wird der Drahtgewindeeinsatz auf die Einbauspindel E‴ aufgespindelt und danach in die Bauteilöffnung eingedreht. Vorzugsweise handelt es sich bei diesem Drahtgewindeeinsatz um einen Drahtgewindeeinsatz mit einem zurückbiegbaren Zapfen, wie er oben bereits beschrieben worden ist.

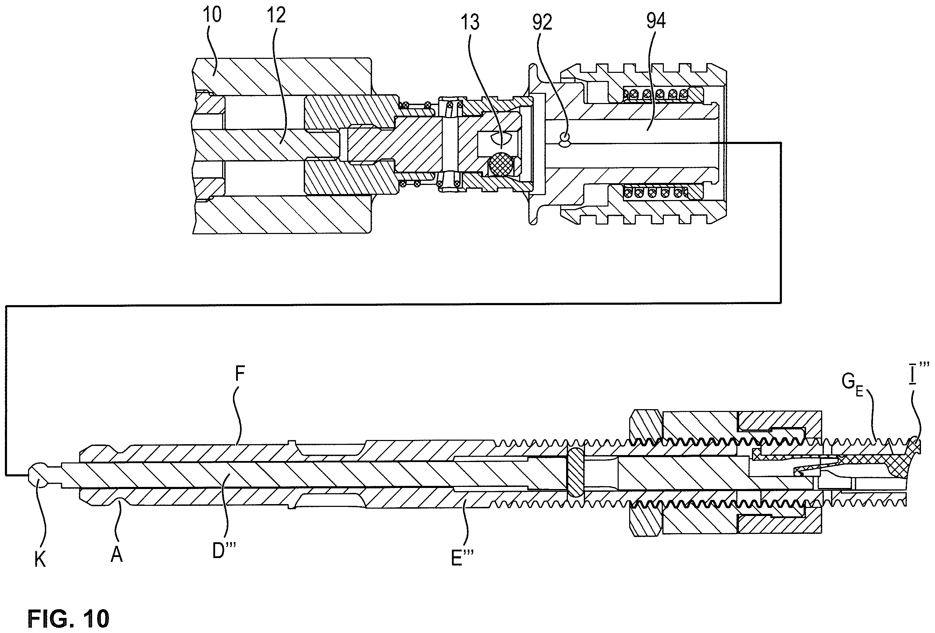

Nach Erreichen einer gewünschten Einbautiefe des Drahtgewindeeinsatzes in der Bauteilöffnung wird durch eine Bewegung des Betätigungsdorns 12 und des Verstelldorns D‴ in Installationsrichtung R_{I} die Installationsklinge I‴ aus der Einbauklinge E‴ ausgestellt. Diesen Zustand zeigt vorzugsweise Figur 10.

Nun wird die Setzspindel 10 und damit die Einbauspindel E‴ entgegengesetzt zur Eindrehrichtung des Drahtgewindeeinsatzes in die Bauteilöffnung gedreht. Bei dieser Drehbewegung greift vorzugsweise eine Seitenfläche der Installationsklinge I‴ an einem zurückbiegbaren Zapfen des eingedrehten Drahtgewindeeinsatzes an und biegt diesen, vorzugsweise staucht diesen, in das Aufnahmegewinde der Bauteilöffnung. Dabei wird der zurückbiegbare Zapfen nicht gebrochen.

Nachdem der Zapfen zurückgebogen worden ist, wird die Einbauspindel E‴ über die Setzspindel 10 für vorzugsweise weniger als eine Vierteldrehung in Eindrehrichtung des Drahtgewindeeinsatzes gedreht. Dadurch wird die Anlage zwischen der Installationsklinge I‴ und dem zurückbiegbaren Zapfen gelöst. Danach bewegt der Verstelldorn D‴ gesteuert durch den Betätigungsdorn 12 die Installationsklinge I‴ zurück in die Einbauspindel E'". Sobald die Installationsklinge I‴ wieder von der Einbauspindel E‴ aufgenommen ist, wird die Einbauspindel E‴ vollständig aus dem installierten Drahtgewindeeinsatz ausgeschraubt bzw. ausgespindelt.

Das oben beschriebene Installationsverfahren ist in größerem Detail und mit weiteren bevorzugten Ausgestaltungen auch in WO 2018/114122 A1 beschrieben.

Um die oben beschriebenen Schritte des Einbauwerkzeugs E‴ verlässlich mit dem Einbauautomaten 1 ansteuern zu können, verbindet vorzugsweise das Werkzeugfutter 90 den Einbauautomaten 1 kraftschlüssig und formschlüssig mit dem Einbauwerkzeug E‴. Dies wird anhand einer bevorzugten Ausgestaltung in Figur 10 näher erläutert.

Der Betätigungsdorn 12 weist vorzugsweise eine Aufnahme 13 mit Kugelverriegelung auf. Dort wird ein Kugelkopf K des Verstelldorns D‴ lösbar verriegelt. Basierend auf dieser Verbindung werden die linearen Verstellbewegungen des Betätigungsdorns 12 in und entgegen der Installationsrichtung R_{I} auf den Verstelldorn D‴ übertragen.

Die Einbauspindel E‴ umfasst vorzugsweise ein formschlüssiges Außenprofil F in einem axialen Endbereich abgewandt vom Gewindeende der Einbauspindel E‴. Das formschlüssige Außenprofil F ist nicht rotationssymmetrisch, vorzugsweise als ein Vierkant, ein Sechskant o. ä., ausgebildet.

Das formschlüssige Außenprofil F wird in einem komplementär dazu ausgebildeten Aufnahmeraum 94 aufgenommen. Der dadurch entstehende Formschluss zwischen der Setzspindel 10 und der Einbauspindel E‴ gewährleistet eine Übertragung der Drehbewegung der Setzspindel 10 auf die Einbauspindel E‴.

Um die Einbauspindel E‴ lösbar und fest in der Aufnahme 94 zu halten, ist vorzugsweise eine Kugelverriegelung 92 im Werkzeugfutter 90 vorgesehen. Die Kugelverriegelung 92 greift in einer Aufnahme A, vorzugsweise einer Nut, einer Vertiefung oder einer Verrastungskontur, an der Einbauspindel E‴ ein oder an.

Mit den oben beschriebenen bevorzugten Verbindungsstrukturen ist das Einbauwerkzeug E‴ verlässlich mit dem Einbauautomaten 1 verbindbar und bei Verschleiß austauschbar.

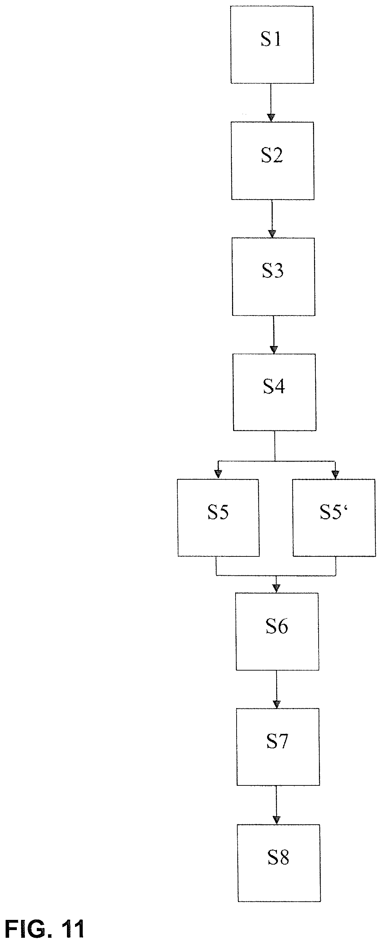

Das Setzen eines Drahtgewindeeinsatzes wird basierend auf der bevorzugten Kombination des Einbauautomaten 1 und des Einbauwerkzeugs für einen Drahtgewindeeinsatz mit zurückbiegbarem Zapfen gemäß EP 2 637 825 B1 beschrieben. Ein derartiges Einbauwerkzeug W oder W` ist in WO 2018/114122 A1 oder in WO 2019/141497 beschrieben (siehe oben). Ein entsprechendes Flussdiagramm zeigt Figur 11.

Zunächst wird in einem ersten Schritt S1 der Drahtgewindeeinsatz auf die Einbauspindel E aufgespindelt. Dazu dreht der Motor M die Setzspindel 10, so dass sich die Einbauspindel E in den Drahtgewindeeinsatz einschraubt bzw. der Drahtgewindeeinsatz auf die Einbauspindel E aufgeschraubt wird.

Nachfolgend wird im Schritt S2 die Spitze der Einbauspindel mit aufgespindeltem Drahtgewindeeinsatz über der Gewindebohrung im Bauteil positioniert. Anschließend bewegt bevorzugt der erste Pneumatikzylinder 30 die Einbauspindel 10 und damit den Drahtgewindeeinsatz in Installationsrichtung R_{I} in Richtung der Gewindeöffnung. Vorzugsweise wird während der Zustellung im Schritt S2 die Setzspindel 10 in Einschraubrichtung des Drahtgewindeeinsatzes gedreht (Schritt S3). Dies hat den bevorzugten Vorteil, dass der Drahtgewindeeinsatz in der Zustellbewegung mithilfe der Drehbewegung in das Gewinde der Gewindebohrung des Bauteils einfädeln kann.

Bei Erreichen einer definierten Relativposition, die vorzugsweise der Positionssensor des ersten Pneumatikzylinders 30 erfasst, wird bevorzugt die Drehzahl der Setzspindel 10 reduziert. Die Drehzahlreduktion dient dazu, bei Erreichen einer Ziel-Einschraubtiefe des Drahtgewindeeinsatzes den Einschraubprozess positionsgetreu abschließen bzw. beenden zu können (Schritt S4).

Um den bevorzugten zurückbiegbaren Zapfen des Drahtgewindeeinsatzes in das Bauteilgewinde zurückzubiegen, wird über das Stellglied 50; 50`; 50" in der Verbindungseinheit 40 der Betätigungsdorn 12 in Installationsrichtung R_{I} bewegt. Über den Dorn des Einbauwerkzeugs wird die bevorzugte Stauchklinge aus der Einbauspindel ausgestellt.

Nachdem die Stauchklinge über das Stellglied 50; 50`; 50" und den Dorn aus der Einbauspindel ausgestellt worden ist, dreht der Motor die Setzspindel 10 entgegen der Einschraubrichtung in eine zweite Drehrichtung. Auf diese Weise wird vorzugsweise der zurückbiegbare Zapfen in das Gewinde der Einbauöffnung zurückgebogen (Schritt S5).

Ebenfalls bevorzugt wird an dieser Stelle des Verfahrens in Kombination mit dem Einbauwerkzeug gemäß Figur 2C mithilfe des Dorns D" der Zapfen Z gebrochen. Dazu wird die Bewegung des Betätigungsdorns 12 in eine entsprechende Bewegung des Dorns D" umgesetzt (Schritt S5').

Nachdem der Zapfen des Drahtgewindeeinsatzes bearbeitet worden ist, wird die Einbauspindel in Schritt S6 entgegen der Einschraubrichtung gedreht, um die Stauchklinge nach dem Zurückbiegen des zurückbiegbaren Zapfens zu entlasten. Danach wird der Betätigungsdorn 12 entgegen der Installationsrichtung R_{I} bewegt oder in die Setzspindel 10 eingezogen. Dies erfolgt über die entsprechende Bewegung des Stellglieds 50; 50`; 50" (Schritt S7).

Danach wird die Setzspindel 10 entgegen der Einschraubrichtung gedreht. Dadurch wird die Einbauspindel aus der Gewindebohrung ausgedreht (Schritt S8).

In Abhängigkeit von dem vorzugsweise verwendeten zweiten Stellglied in der Verbindungseinheit 40 werden folgende Schritte zum Betätigen des Stellglieds durchgeführt. Zunächst wird bei dem Stellglied 50 mit dem doppelt wirkenden Pneumatikzylinder sowie bei dem Stellglied 50' mit dem einfach wirkenden Pneumatikzylinder ein Pneumatikdruck zugeschaltet. Dieser führt dazu, dass der Betätigungsdorn 12 der Setzspindel 10 aus seiner Ausgangsposition ausgestellt wird.

Um den Betätigungsdorn nach Abschluss seines Betätigungsschritts in seine Ausgangsposition zurückführen zu können, wird im Stellglied 50' mit einfach wirkenden Pneumatikzylinder zunächst der Pneumatikdruck abgeschaltet. Durch Abschalten des Pneumatikdrucks wird der einfach wirkende Kolben 58 pneumatisch entlastet und die vorgespannte Feder 60 erzeugt eine Federrückstellung des einfach wirkenden Kolbens und des damit verbundenen Betätigungsdorns 12.

Im Stellglied 50 mit doppelt wirkendem Pneumatikzylinder wird zunächst der Pneumatikdruck einer ersten Kammer des doppelt wirkenden Pneumatikzylinders abgeschaltet. Nachfolgend wird der Pneumatikdruck in der zweiten Kammer des doppelt wirkenden Pneumatikzylinders zugeschaltet. Auf diese Weise erfolgt ein Zurückstellen des Betätigungsdorns 12 entgegen der Installationsrichtung R_{I} vorzugsweise in seiner Ausgangsposition.

Bei der bevorzugten Verwendung eines elektromagnetischen oder eines piezoelektrischen Stellglieds 50" wird dieses Stellglied mithilfe elektrischer Signale angesteuert. Wird beispielsweise zunächst ein elektrisches Signal an das elektromagnetische oder das piezoelektrische Stellglied übermittelt, wird dadurch das Stellglied betätigt und der Betätigungsdorn 12 in der Setzspindel 10 aus seiner Ausgangsposition in Richtung Installationsrichtung R_{I} ausgestellt. Nachdem der Betätigungsdorn seine Funktion erfüllt hat, wird bevorzugt das elektrische Signal an das elektromagnetische Stellglied oder das piezoelektrische Stellglied abgeschaltet. Entsprechend wird bevorzugt das elektromagnetische Stellglied zurückgestellt, wodurch der Betätigungsdorn in die Ausgangsposition mitgeführt oder zurückgeführt wird. Gemäß einer anderen bevorzugten Ausgestaltung weist das elektromagnetische Stellglied eine Federrückstellung auf. Nach Abschalten des elektrischen Signals erzeugt die vorgespannte Feder eine Rückstellung des elektromagnetischen Stellglieds zusammen mit dem Betätigungsdorn in die jeweilige Ausgangsposition.

### Bezugszeichenliste

- 1: Einbauautomat
- 5: Bauteil
- 10: Setzspindel
- 12: Betätigungsdorn
- 13: Aufnahme mit Kugelverriegelung am Betätigungsdorn
- 14: Untersetzungsgetriebe
- 16: Drehmomentsensor
- 18: Klauenkupplung
- 20: Kugelbüchse
- 30: erstes Stellglied
- 32: Kolben des ersten Pneumatikzylinders
- 40; 40'; 40'': drehentkoppelnde Verbindungseinheit
- 42: Aufnahmeraum
- 44: Kulissenführung
- 46: Rotationszylinder
- 48: Rollenkugellager
- 50; 50'; 50'': zweites Stellglied
- 52: doppelt wirkender Kolben
- 54, 56: Druckluftanschluss
- 58: einfach wirkender Kolben
- 60: Rückstellfeder
- 62: Versorgungsleitung
- 90: Werkzeugfutter
- 92: Kugelverriegelung zur Befestigung der Einbauspindel E
- 94: drehfester Formschluss zwischen Werkzeugfutter und Einbauspindel E
- Z: Zustellvorrichtung
- E, E', E'', E''': Einbauspindel
- D, D', D'', D''': Verstelldorn
- I, I', I'', I''': Installationsklinge
- G: Drahtgewindeeinsatz
- H: Zapfen des Drahtgewindeeinsatzes
- M: Antriebseinheit / Motor
- S: Steuereinheit
- W, W', W'', W''': Einbauwerkzeug
- K: Kugelkopf am Verstelldorn D‴
- F: formschlüssiges Außenprofil an der Einbauspindel E‴
- G_{E}: Gewinde auf der Einbauspindel E‴
- A: Aufnahme für Kugelverriegelung 92 des Werkzeugfutters 90

## Patentansprüche

1. Ein Einbauautomat (1), der mit einem Einbauwerkzeug (W; W'; W"; W‴) für einen Drahtgewindeeinsatz (G) verbindbar ist, um den Drahtgewindeeinsatz (G) in einer Gewindebohrung zu installieren, wobei der Einbauautomat (1) die folgenden Merkmale aufweist:
a. eine drehende Antriebseinheit (M), die eine zwischen einer ersten und einer zweiten Drehrichtung umschaltbare Drehbewegung bereitstellt,
b. eine axial versetzbare hohlzylindrische Setzspindel (10) in Drehkopplung (20) mit der drehenden Antriebseinheit (M), sodass während einer Übertragung einer Drehbewegung von der Antriebseinheit (M) auf die Setzspindel (10) die Setzspindel (10) unabhängig von der Drehbewegung in Längsrichtung versetzbar ist,
c. ein erstes Stellglied (30), dessen Wirkrichtung parallel zur Längsrichtung der Setzspindel (10) orientiert ist und das mit der Setzspindel (10) versatzgekoppelt ist, so dass die Setzspindel (10) durch das Stellglied (30) axial versetzbar ist,
d. einen axial versetzbaren Betätigungsdorn (12), der innerhalb der hohlzylindrischen Setzspindel (10) angeordnet ist, **dadurch gekennzeichnet, dass** der Betätigungsdorn (12) im Wesentlichen drehungsfrei angetrieben ist, und
e. dass der Einbauautomat (1) ein Werkzeugfutter (90) aufweist, über welches das Einbauwerkzeug (W; W`; W"; W‴) für einen Drahtgewindeeinsatz (G) mit der Setzspindel (10) verbindbar ist.

2. Der Einbauautomat (1) gemäß Patentanspruch 1, in dem die drehbare Setzspindel (10) und das erste Stellglied (30) über eine drehentkoppelnde Verbindungseinheit (40; 40`; 40") miteinander verbunden sind, sodass die Setzspindel (10) bei gleichzeitiger Drehung durch das erste Stellglied (30) linear versetzbar ist.

3. Der Einbauautomat (1) gemäß Patentanspruch 2, in dem die Verbindungseinheit (40; 40`; 40") ein zweites Stellglied, (50; 50`; 50") umfasst, mit dem der Betätigungsdorn (12) innerhalb der Setzspindel (10) linear versetzbar ist.

4. Der Einbauautomat (1) gemäß Patentanspruch 3, in dem das erste (30) und/oder das zweite Stellglied (50; 50') als ein doppelt wirkender Pneumatikzylinder oder ein einfach wirkender Pneumatikzylinder mit Federrückstellung ausgebildet ist.

5. Der Einbauautomat (1) gemäß einem der vorhergehenden Patentansprüche, in dem das Werkzeugfutter (90) eine Kugelverriegelung (92) oder eine Spannzange für eine Einbauspindel (E; E`; E"; E‴) des Einbauwerkzeugs (W; W'; W"; W‴) ist.

6. Der Einbauautomat (1) gemäß einer der vorhergehenden Patentansprüche, der ein Einbauwerkzeug (W; W'; W"; W‴) mit einer Einbauspindel (E; E`; E"; E‴), einem darin linear bewegbar angeordneten Verstelldorn (D; D`; D"; D‴), welcher eine Installationsklinge (I, I', I", I‴), insbesondere eine Mitnahme- und/oder Stauchklinge, ausstellt, aufweist.

7. Ein Installationsverfahren (1) für einen Drahtgewindeeinsatz (G) in einer Gewindebohrung eines Bauteils mit einem Einbauautomaten (1) gemäß Patentanspruch 2, welches die folgenden Schritte aufweist:
a. Aufspindeln eines Drahtgewindeeinsatzes (G) auf eine Einbauspindel (E; E`; E"; E" `) eines mit einer Setzspindel (10) verbundenen Einbauwerkzeugs (W; W'; W"; W‴), in dem eine drehende Antriebseinheit (M) die Setzspindel (10) dreht (S1),
b. Zustellen der Einbauspindel (E; E`; E"; E‴) mit dem aufgespindelten Drahtgewindeeinsatz (G) zu der Gewindebohrung mit einem ersten Stellglied (30), insbesondere ein Pneumatikzylinder, der die Setzspindel (10) in Längsrichtung versetzt (S2),
c. Drehen der Setzspindel (10) in eine erste Drehrichtung, um den Drahtgewindeeinsatz (G) in die Gewindebohrung einzudrehen (S3),
d. Ausstellen eines innerhalb der Setzspindel (10) angeordneten Betätigungsdorns (12) über ein zweites Stellglied (50; 50`; 50"), welches in einer drehentkoppelnden Verbindungseinheit (40; 40'; 40") zwischen der Setzspindel (10) und dem ersten Stellglied (30) angeordnet ist, um einen Zapfen (H) des Drahtgewindeeinsatzes (G) zu bearbeiten (S5; S5'),
e. Drehen der Setzspindel (10) in einer zweiten Drehrichtung, um die Einbauspindel (E; E`; E"; E" `) aus der Gewindebohrung auszudrehen (S8).

8. Das Installationsverfahren gemäß Patentanspruch 7, wobei die drehentkoppelnde Verbindungseinheit (40; 40`; 40") einen einfach wirkenden Pneumatikzylinder (50') mit Federrückstellung oder einen doppelt wirkenden Pneumatikzylinder (50) als zweites Stellglied (50, 50') umfasst und das Installationsverfahren den weiteren Schritt aufweist:
Zuschalten eines Pneumatikdrucks zum einfach wirkenden Pneumatikzylinder (50') oder zum doppelt wirkenden Pneumatikzylinder (50), wodurch der Betätigungsdorn (12) in der Setzspindel (10) aus einer Ausgangsposition ausgestellt wird, und
Abschalten des Pneumatikdrucks im einfach wirkenden Pneumatikzylinder (50') und Federrückstellen des Betätigungsdorns (12) in die Ausgangsposition oder
Abschalten des Pneumatikdrucks in einer ersten Kammer des doppelt wirkenden Pneumatikzylinders (50) und Zuschalten eines Pneumatikdrucks in einer zweiten Kammer des doppelt wirkenden Pneumatikzylinders (50) und dadurch Zurückstellen des Betätigungsdorns (12) in die Ausgangsposition.

9. Das Installationsverfahren gemäß Patentanspruch 7, wobei die drehentkoppelnde Verbindungseinheit (40; 40'; 40") ein elektromagnetisches Stellglied als zweites Stellglied (50") umfasst und das Installationsverfahren den weiteren Schritt aufweist:
Weiterleiten eines elektrischen Signals an das elektromagnetische Stellglied, wodurch das zweite Stellglied (50") betätigt und der Betätigungsdorn (12) in der Setzspindel (10) aus einer Ausgangsposition ausgestellt wird, und
Abschalten des elektrischen Signals an das elektromagnetische Stellglied, wodurch das zweite Stellglied (50") zurückgestellt wird und den Betätigungsdorn (12) in die Ausgangsposition mitführt oder wodurch das zweite Stellglied (50") und der Betätigungsdorn (12) federrückgestellt werden.

## Claims

1. An installation machine (1) which is connectable to an installation tool (W; W'; W"; W‴) for a wire thread insert (G) so as to install the wire thread insert (G) in a thread bore, wherein the installation machine (1) comprises the following features:
a. a rotating drive unit (M) providing a rotation movement that is switchable between a first and a second rotation direction,
b. an axially displaceable hollow-cylindrical setting spindle (10) in rotation coupling (20) with the rotating drive unit (M) so that during a transmission of a rotation movement from the drive unit (M) to the setting spindle (10), the setting spindle (10) is displaceable in longitudinal direction independent of the rotation movement,
c. a first actuating member (30), the effective direction of which is oriented parallel to the longitudinal direction of the setting spindle (10) and which is coupled with an offset with the setting spindle (10) so that the setting spindle (10) is axially displaceable by the actuating member (30),
d. an axially displaceable actuating mandrel (12) that is arranged within the hollow cylindrical setting spindle (10), **characterized in that** the actuating mandrel (12) is driven generally rotation-free, and
e. **in that** the installation machine (1) comprises a tool chuck (90) via which the installation tool (W; W'; W"; W‴) for a wire thread insert (G) is connectable with the setting spindle (10).

2. The installation machine (1) according to claim 1 in which the rotatable setting spindle (10) and the first actuating member (30) are connected with each other via a rotation-decoupling connecting unit (40; 40'; 40") so that the setting spindle (10) is linearly displaceable when simultaneously rotating the first actuating member (30).

3. The installation machine (1) according to claim 2 in which the connecting unit (40; 40'; 40") comprises a second actuating member (50; 50'; 50") with which the actuating mandrel (12) is linearly displaceable within the setting spindle (10).

4. The installation machine (1) according to claim 3 in which the first (30) and/or the second actuating member (50; 50') is configured as a double-acting pneumatic cylinder or single-acting pneumatic cylinder with spring reset.

5. The installation machine (1) according to one of the preceding claims, in which the tool chuck (90) is a ball lock (92) or a collet chuck for an installation spindle (E; E'; E"; E‴) of the installation tool (W; W'; W"; W‴).

6. The installation machine (1) according to one of the preceding claims, comprising an installation tool (W; W'; W"; W‴) with an installation spindle (E; E'; E"; E‴), an adjustment mandrel (D; D'; D"; D‴) that is linearly movable in there, which moves out an installation blade (I, I', I", I‴), in particular a dragging blade and/or compression blade.

7. An installation method (1) for a wire thread insert (G) in a thread bore of a component with an installation machine (1) according to claim 2, comprising the following steps:
a. screwing a wire thread insert (G) onto an installation spindle (E; E'; E"; E‴) of an installation tool (W; W'; W"; W‴) that is connected with a setting spindle (10), in which a rotating drive unit (M) rotates the setting spindle (10) (S1),
b. delivering the installation spindle (E; E'; E"; E‴) with the screwed-on wire thread insert (G) to the thread bore with a first actuating member (30), in particular a pneumatic cylinder which displaces the setting spindle (10) in longitudinal direction (S2),
c. rotating the setting spindle (10) in a first rotation direction in order to screw the wire thread insert (G) into the thread bore (S3),
d. moving-out an actuating mandrel (12) that is arranged within the setting spindle (10) by means of a second actuating member (50; 50'; 50"), which is arranged in a rotation-decoupling connecting unit (40; 40'; 40") between the setting spindle (10) and the first actuating member (30) in order to process a tang (H) of the wire thread insert (G) (S5; S5'),
e. rotating the setting spindle (10) in a second rotation direction in order to unscrew the installation spindle (E; E'; E"; E"') from the thread bore (S8).

8. The installation method according to claim 7, wherein the rotation-decoupling connecting unit (40; 40'; 40") comprises a single-acting pneumatic cylinder (50') with spring reset or a double-acting pneumatic cylinder (50) as second actuating member (50, 50') and the installation method comprises the further step:
adding a pneumatic pressure to the single-acting pneumatic cylinder (50') or to the double-acting pneumatic cylinder (50), whereby the actuating mandrel (12) in the setting spindle (10) is moved out from an initial position, and
switching-off the pneumatic pressure in the single-acting pneumatic cylinder (50') and spring-resetting the actuating mandrel (12) into the initial position or
switching-off the pneumatic pressure in a first chamber of the double-acting pneumatic cylinder (50) and adding a pneumatic pressure in a second chamber of the double-acting pneumatic cylinder (50) and thereby moving back the actuating mandrel (12) into the initial position.

9. The installation method according to claim 7, wherein the rotation-decoupling connecting unit (40; 40'; 40") comprises an electromagnetic actuating member as second actuating member (50") and wherein the installation method comprises the following step:
forwarding an electric signal to the electromagnetic actuating member whereby the second actuating member (50") is activated and the actuating mandrel (12) is moved out in the setting spindle (10) from an initial position, and
switching-off the electric signal to the electromagnetic actuating member whereby the second actuating member (50") is moved back and drags along the actuating mandrel (12) into the initial position or whereby the second actuating member (50") and the actuating mandrel (12) are spring-rest.

## Revendications

1. Dispositif automatique d'installation (1) apte à être relié à un outil d'installation (W ; W' ; W" ; W‴) pour un insert de filetage (G) afin d'installer l'insert de filetage (G) dans un alésage fileté, le dispositif automatique d'installation (1) présentant les caractéristiques suivantes :
a. une unité d'entraînement rotative (M) fournissant un mouvement de rotation commutable entre une première et une deuxième direction de rotation,
b. une broche de pose (10) cylindrique creuse déplaçable axialement dans un accouplement rotatif (20) avec l'unité d'entraînement rotative (M), de sorte que lors d'une transmission d'un mouvement de rotation de l'unité d'entraînement (M) à la broche de pose (10), la broche de pose (10) peut être déplacée dans la direction longitudinale indépendamment du mouvement de rotation,
c. un premier actionneur (30), dont la direction d'action est orientée parallèlement à la direction longitudinale de la broche de pose (10) et lequel est accouplé en déplacement avec la broche de pose (10), de telle façon que la broche de pose (10) est déplaçable axialement par l'actionneur (30),
d. un arbre de commande (12) déplaçable axialement, lequel est disposé dans la broche de pose (10) cylindrique creuse, **caractérisé en ce que** l'arbre de commande (12) est entraîné essentiellement sans rotation, et
e. **en ce que** le dispositif automatique d'installation (1) présente un mandrin porte-outil (90), par le biais duquel l'outil d'installation (W ; W' ; W" ; W‴) pour un insert de filetage (G) peut être relié à la broche de pose (10).

2. Dispositif automatique d'installation (1) selon la revendication 1, dans lequel la broche de pose (10) rotative et le premier actionneur (30) sont reliés entre eux par le biais d'une unité d'assemblage à désaccouplement rotatif (40 ; 40' ; 40"), de telle façon que la broche de pose (10) est déplaçable linéairement par rotation simultanée par le premier actionneur (30).

3. Dispositif automatique d'installation (1) selon la revendication 2, dans lequel l'unité d'assemblage (40 ; 40' ; 40") comporte un deuxième actionneur (50 ; 50' ; 50"), avec lequel l'arbre de commande (12) peut être déplacé linéairement dans la broche de pose (10).

4. Dispositif automatique d'installation (1) selon la revendication 3, dans lequel le premier (30) et/ou le deuxième actionneur (50 ; 50') est conçu comme un cylindre pneumatique à double action ou comme un cylindre pneumatique à action simple avec rappel par ressort.

5. Dispositif automatique d'installation (1) selon l'une des revendications précédentes, dans lequel le mandrin porte-outil (90) est un verrouillage à bille (92) ou une pince de serrage pour une broche d'installation (E ; E' ; E" ; E‴) de l'outil d'installation (W ; W' ; W"; W‴).

6. Dispositif automatique d'installation (1) selon l'une des revendications précédentes, lequel présente un outil d'installation (W ; W' ; W" ; W‴) avec une broche d'installation (E ; E' ; E" ; E‴), un arbre de réglage (D ; D' ; D" ; D‴) disposé dans celle-ci de manière à pouvoir se déplacer linéairement, lequel déploie une lame d'installation (I ; I' ; I" ; I‴), en particulier une lame d'entraînement et/ou de refoulement.

7. Procédé d'installation (1) pour un insert de filetage (G) dans un alésage fileté d'un composant avec un dispositif automatique d'installation (1) selon la revendication 2, lequel présente les étapes suivantes :
a. vissage d'un insert de filetage (G) sur une broche d'installation (E ; E' ; E" ; E‴) d'un outil d'installation (W ; W' ; W" ; W‴) relié à une broche de pose (10), dans lequel une unité d'entraînement rotative (M) fait tourner la broche de pose (10) (S1),
b. placement de la broche d'installation (E ; E' ; E" ; E‴) avec l'insert de filetage (G) vissé dans l'alésage fileté avec un premier actionneur (30), en particulier un cylindre pneumatique, lequel déplace la broche de pose (10) dans la direction longitudinale (S2),
c. rotation de la broche de pose (10) dans une première direction de rotation, pour visser l'insert de filetage (G) dans l'alésage fileté (S3),
d. déploiement d'un arbre de commande (12) disposé à l'intérieur de la broche de pose (10), par le biais d'un deuxième actionneur (50 ; 50' ; 50"), lequel est disposé dans une unité d'assemblage à désaccouplement rotatif (40 ; 40' ; 40") entre la broche de pose (10) et le premier actionneur (30), pour traiter un ergot (H) de l'insert de filetage (G) (S5 ; S5'),
e. rotation de la broche de pose (10) dans une deuxième direction de rotation, pour dévisser la broche d'installation (E ; E' ; E" ; E‴) hors de l'alésage fileté (S8).

8. Procédé d'installation selon la revendication 7, dans lequel l'unité d'assemblage à désaccouplement rotatif (40 ; 40' ; 40") comporte un cylindre pneumatique à action simple (50') avec rappel par ressort ou un cylindre pneumatique à double action (50) en tant que deuxième actionneur (50 ; 50') et le procédé d'installation présente l'étape supplémentaire suivante :
- apport d'une pression pneumatique au cylindre pneumatique à action simple (50') ou au cylindre pneumatique à double action (50), moyennant quoi l'arbre de commande (12) est déployé à partir d'une position de départ dans la broche de pose (10), et
- arrêt de la pression pneumatique dans le cylindre pneumatique à action simple (50') et rappel par ressort de l'arbre de commande (12) vers la position de départ ou
- arrêt de la pression pneumatique dans une première chambre du cylindre pneumatique à double action (50) et apport d'une pression pneumatique dans une deuxième chambre du cylindre pneumatique à double action (50), et par conséquent rappel de l'arbre de commande (12) vers la position de départ.

9. Procédé d'installation selon la revendication 7, dans lequel l'unité d'assemblage à désaccouplement rotatif (40 ; 40' ; 40") comporte un actionneur électromagnétique en tant que deuxième actionneur (50") et le procédé d'installation présente l'étape supplémentaire suivante :
- transmission d'un signal électrique à l'actionneur électromagnétique, moyennant quoi le deuxième actionneur (50") est actionné et l'arbre de commande (12) est déployé à partir d'une position de départ dans la broche de pose (10), et
- arrêt du signal électrique transmis à l'actionneur électromagnétique, moyennant quoi le deuxième actionneur (50") est rappelé et entraîne l'arbre de commande (12) vers la position de départ ou moyennant quoi le deuxième actionneur (50") et l'arbre de commande (12) sont rappelés par ressort.
